(19) Europäisches Patentamt
European Patent Office
Office européen des brevets

(11) **EP 4 546 891 A1**

(12) **EUROPEAN PATENT APPLICATION**
published in accordance with Art. 153(4) EPC

(43) Date of publication:
**30.04.2025 Bulletin 2025/18**

(21) Application number: **22947299.8**

(22) Date of filing: **22.06.2022**

(51) International Patent Classification (IPC):
*H04W 52/04* $^{(2009.01)}$

(52) Cooperative Patent Classification (CPC):
**H04W 52/04**

(86) International application number:
**PCT/CN2022/100586**

(87) International publication number:
**WO 2023/245524 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• ZHANG, Yi
  Dongguan, Guangdong 523860 (CN)
• XU, Jing
  Dongguan, Guangdong 523860 (CN)
• LIANG, Bin
  Dongguan, Guangdong 523860 (CN)
• LIN, Yanan
  Dongguan, Guangdong 523860 (CN)

(74) Representative: **RGTH
Patentanwälte PartGmbB
Neuer Wall 10
20354 Hamburg (DE)**

(54) **POWER CONTROL METHOD AND DEVICE**

(57) The present application relates to a power control method and a device. The method comprises: according to a path loss of at least one first link, a first device determines a transmission power of a channel/signal used for sensing, the first link being a link related to a transmission link for the channel/signal used for sensing. The present application allows for control of transmission powers of channels/signals used for sensing.

300

A first device determines, based on a path loss of at least one first link, transmit power of a channel/signal used for sensing, the first link including a link related to the channel/signal used for sensing — S310

FIG. 3

EP 4 546 891 A1

**Description**

**TECHNICAL FIELD**

This application relates to the field of communications, and more specifically, to a power control method and a device.

**BACKGROUND**

In a communication system, in order to overcome the near-far effect such that signal strengths of signals from different transmitting ends do not differ significantly from each other when the signals reach a receiving end, and to suppress interference between intra-frequency cells, it is necessary to control transmit power of a channel/signal. How to control transmit power of a channel/signal used for sensing is a technical problem that needs to be solved.

**SUMMARY**

Embodiments of this application provide a power control method and a device, so as to control transmit power of a channel/signal used for sensing.
An embodiment of this application provides a power control method, including:
determining, by a first device based on a path loss of at least one first link, transmit power of a channel/signal used for sensing, the first link including a link related to the channel/signal used for sensing.
An embodiment of this application provides a power control method, including:
determining, by a second device, transmit power of a channel/signal based on at least one of a transmit power model and a power control parameter corresponding to the channel/signal.
An embodiment of this application provides a receiving method, including:
receiving, by a third device, a channel/signal used for sensing that is sent based on transmit power, where the transmit power is determined based on a path loss of at least one first link, and the first link includes a link related to the channel/signal used for sensing.
An embodiment of this application provides a receiving method, including:
receiving, by a fourth device, a channel/signal that is sent based on transmit power, where the transmit power is determined based on at least one of a transmit power model and a power control parameter corresponding to the channel/signal.
An embodiment of this application provides a device, including:
a first determining module, configured to determine, based on a path loss of at least one first link, transmit power of a channel/signal used for sensing, the first link including a link related to the channel/signal used for sensing.
An embodiment of this application provides a device, including:
a second determining module, configured to determine transmit power of a channel/signal based on at least one of a transmit power model and a power control parameter corresponding to the channel/signal.
An embodiment of this application provides a device, including:
a first receiving module, configured to receive a channel/signal used for sensing that is sent based on transmit power, where the transmit power is determined based on a path loss of at least one first link, and the first link includes a link related to the channel/signal used for sensing.
An embodiment of this application provides a device, including:
a second receiving module, configured to receive a channel/signal that is sent based on transmit power, where the transmit power is determined based on at least one of a transmit power model and a power control parameter corresponding to the channel/signal.
An embodiment of this application provides a device, including a processor and a memory. The memory is configured to store a computer program, and the processor is configured to call and run the computer program stored in the memory, such that the device performs the power control method or the receiving method described above.
An embodiment of this application provides a chip, configured to implement the power control method described above.
Specifically, the chip includes a processor, configured to call and run a computer program from a memory, such that a device installed with the chip performs the power control method or the receiving method described above.
An embodiment of this application provides a computer-readable storage medium, configured to store a computer program that, when run by a device, causes the device to perform the power control method or the receiving method described above.
An embodiment of this application provides a computer program product, including computer program instructions that cause a computer to perform the power control method or the receiving method described above.

An embodiment of this application provides a computer program that, when run on a computer, causes the computer to perform the power control method described above.

In the embodiments of this application, the transmit power of the channel/signal used for sensing is determined based on the path loss of the link related to the channel/signal used for sensing, thereby controlling the transmit power of the channel/signal used for sensing.

## BRIEF DESCRIPTION OF DRAWINGS

FIG. 1 is a schematic diagram of an application scenario according to an embodiment of this application.
FIG. 2A to FIG. 2H are schematic diagrams of sensing modes.
FIG. 3 is a schematic flowchart of a power control method 300 according to an embodiment of this application.
FIG. 4 is an implementation flowchart of a power control method 400 according to an embodiment of this application.
FIG. 5 is a schematic flowchart of a receiving method 500 according to an embodiment of this application.
FIG. 6 is an implementation flowchart of a receiving method 600 according to an embodiment of this application.
FIG. 7 is a schematic block diagram of a device 700 according to an embodiment of this application.
FIG. 8 is a schematic block diagram of a device 800 according to an embodiment of this application.
FIG. 9 is a schematic block diagram of a device 900 according to an embodiment of this application.
FIG. 10 is a schematic block diagram of a device 1000 according to an embodiment of this application.
FIG. 11 is a schematic block diagram of a device 1100 according to an embodiment of this application.
FIG. 12 is a schematic block diagram of a device 1200 according to an embodiment of this application.
FIG. 13 is a schematic block diagram of a device 1300 according to an embodiment of this application.
FIG. 14 is a schematic block diagram of a chip 1400 according to an embodiment of this application.

## DESCRIPTION OF EMBODIMENTS

The technical solutions in the embodiments of this application will be described below with reference to the accompanying drawings in the embodiments of this application.

The technical solutions in the embodiments of this application may be applied to various communication systems, for example: a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE in unlicensed spectrum (LTE-based access to unlicensed spectrum, LTE-U) system, an NR in unlicensed spectrum (NR-based access to unlicensed spectrum, NR-U) system, a non-terrestrial network (Non-Terrestrial Networks, NTN) system, a universal mobile telecommunications system (Universal Mobile Telecommunication System, UMTS), a wireless local area network (Wireless Local Area Networks, WLAN), wireless fidelity (Wireless Fidelity, WiFi), a fifth-generation communication (5th-Generation, 5G) system, a sixth-generation communication (6th-Generation, 6G) system and/or subsequent communication system, or another communication system.

Generally, conventional communication systems support a limited number of connections and are easy to implement. However, with the development of communication technologies, mobile communication systems will not only support conventional communications, but will also support, for example, device to device (Device to Device, D2D) communication, machine to machine (Machine to Machine, M2M) communication, machine type communication (Machine Type Communication, MTC), vehicle to vehicle (Vehicle to Vehicle, V2V) communication, vehicle to everything (Vehicle to Everything, V2X) communication, or the like. The embodiments of this application may also be applied to these communication systems.

In an implementation, the communication system in the embodiments of this application may be applied to a carrier aggregation (Carrier Aggregation, CA) scenario, a dual connectivity (Dual Connectivity, DC) scenario, or a standalone (Standalone, SA) networking scenario.

In an implementation, the communication system in the embodiments of this application may be applied to unlicensed spectrum, where the unlicensed spectrum may also be considered as shared spectrum. Alternatively, the communication system in the embodiments of this application may be applied to licensed spectrum, where the licensed spectrum may also be considered as non-shared spectrum.

In the embodiments of this application, various embodiments are described with reference to a network device and a terminal device. The terminal device may also be referred to as user equipment (user equipment, UE), an access terminal, a subscriber unit, a subscriber station, a mobile station, a mobile platform, a remote station, a remote terminal, a mobile device, a user terminal, a terminal, a wireless communication device, a user agent, a user apparatus, or the like.

The terminal device may be a station (STAIION, ST) in a WLAN, or may be a cellular phone, a cordless phone, a session initiation protocol (Session Initiation Protocol, SIP) phone, a wireless local loop (Wireless Local Loop, WLL) station, a personal digital assistant (personal digital assistant, PDA) device, a handheld device having a wireless communication function, a computing device or another processing device connected to a wireless modem, a vehicle-mounted device, a wearable device, a terminal device in a next-generation communication system such as an NR network, a terminal device in a future evolved public land mobile network (Public Land Mobile Network, PLMN), or the like.

In the embodiments of this application, the terminal device may be deployed on land, including indoor or outdoor, handheld, wearable, or vehicle-mounted; or may be deployed on water (such as a ship); or may be deployed in the air (for example, on an airplane, a balloon, and a satellite).

In the embodiments of this application, the terminal device may be a mobile phone (Mobile Phone), a tablet computer (Pad), a computer having a wireless transmitting and receiving function, a virtual reality (Virtual Reality, VR) terminal device, an augmented reality (Augmented Reality, AR) terminal device, a wireless terminal device in industrial control (industrial control), a wireless terminal device in self driving (self driving), a wireless terminal device in remote medical care (remote medical), a wireless terminal device in smart grid (smart grid), a wireless terminal device in transportation safety (transportation safety), a wireless terminal device in smart city (smart city), a wireless terminal device in smart home (smart home), or the like.

By way of example rather than limitation, in the embodiments of this application, the terminal device may also be a wearable device. Wearable devices may also be referred to as smart wearable devices. It is a general term for devices that can be worn and that are intelligently designed and developed for daily wear using wearable technology, such as glasses, gloves, watches, clothing, and shoes. A wearable device is a portable device that is worn directly on the body or integrated into the user's clothing or accessories. A wearable device is not only a hardware device, but also realizes powerful functions through software support, data exchange, and cloud interaction. A smart wearable device in broad sense includes a device that provides a full function, has a large size, and can realize all or some functions without relying on a smartphone, for example, a smartwatch or smart glasses; and a device that focuses only on a specific type of application function and needs to be used in combination with another device such as a smartphone, for example, various smart bands and smart jewelry for vital sign monitoring.

In the embodiments of this application, the network device may be a device for communicating with a mobile device. The network device may be an access point (Access Point, AP) in WLAN or a base station (Base Transceiver Station, BTS) in GSM or CDMA, or may be a base station (NodeB, NB) in WCDMA, or may be an evolved base station (Evolutional Node B, eNB or eNodeB) in LTE, a relay station or an access point, a vehicle-mounted device, a wearable device, a network device (gNB) in an NR network, or a network device in a future evolved PLMN network, or a network device in an NTN network, or the like.

By way of example rather than limitation, in the embodiments of this application, the network device may have mobile characteristics. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may also be a base station deployed on land, water, or other position.

In the embodiments of this application, the network device may provide a service for a cell, and the terminal device communicates with the network device through transmission resources (such as frequency domain resources, or spectrum resources) used by the cell. The cell may be a cell corresponding to the network device (for example, a base station). The cell may belong to a macro base station or a base station corresponding to a small cell (Small cell). The small cell herein may include: a metro cell (Metro cell), a micro cell (Micro cell), a pico cell (Pico cell), a femto cell (Femto cell), or the like. These small cells have the characteristics of small coverage and low transmit power, and are suitable for providing high-rate data transmission services.

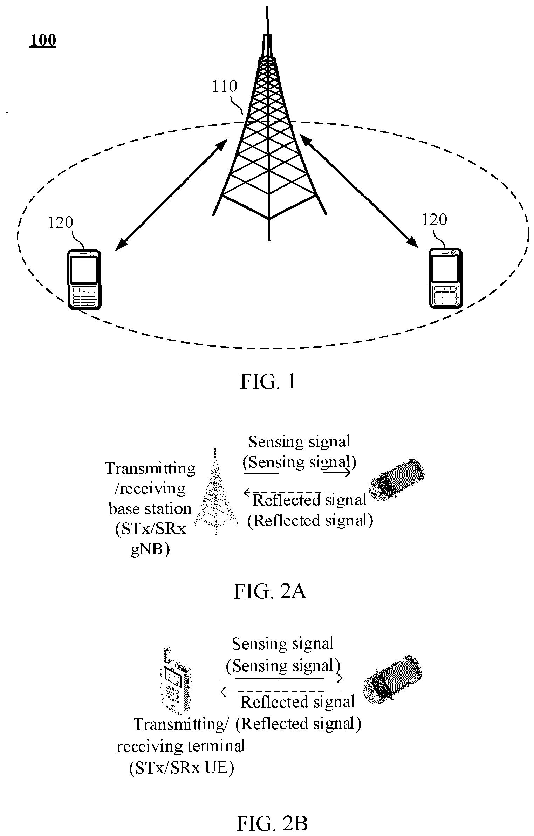

FIG. 1 illustratively shows a communication system 100. The communication system includes one network device 110 and two terminal devices 120. In an implementation, the communication system 100 may include a plurality of network devices 110, and another quantity of terminal devices 120 may be included in a coverage range of each network device 110, which is not limited in embodiments of this application.

In an implementation, the communication system 100 may further include a mobility management entity (Mobility Management Entity, MME), an access and mobility management function (Access and Mobility Management Function, AMF), and other network entities, which is not limited in embodiments of this application.

The network device may further include an access network device and a core network device. That is, the wireless communication system further includes a plurality of core networks for communicating with the access network device. The access network device may be an evolved base station (evolutional node B, which may be abbreviated as eNB or e-NodeB), a macro base station, a micro base station (also called a "small-cell base station"), a pico base station, an access point (access point, AP), a transmission point (transmission point, TP), a new-generation NodeB (gNodeB), or the like in a long-term evolution (long-term evolution, LTE) system, a next-generation (mobile communication system) (next radio, NR) system, or a license assisted access long-term evolution (authorized auxiliary access long-term evolution, LAA-LTE) system.

It should be understood that a device having a communication function in a network/system in embodiments of this application may be referred to as a communication device. Taking the communication system shown in FIG. 1 as an example, the communication device may include a network device and a terminal device having a communication function. The network device and the terminal device may be specific devices in embodiments of this application, and details are not described herein again. The communication device may further include other devices in the communication system, such as a network controller, a mobility management entity, and other network entities, which is not limited in embodiments of this application.

It should be understood that the terms "system" and "network" are often used interchangeably herein. The term "and/or" herein merely describes an association between associated objects, and indicates that three relationships may exist. For example, A and/or B may indicate that only A exists, both A and B exist, and only B exists. In addition, the character "/" herein generally indicates an "or" relationship between the associated objects.

It should be noted that, an "indication" mentioned in embodiments of this application may be a direct indication or an indirect indication, or may indicate the presence of an association. For example, A indicates B, which may mean that A directly indicates B, for example, B can be obtained by means of A; or may mean that A indirectly indicates B, for example, A indicates C, and B can be obtained by means of C; or may mean that there is an association between A and B.

In the description of embodiments of this application, the term "corresponding" may mean that there is a direct or indirect correspondence between the two, or may mean that there is an association between the two, or may be a relationship such as indicating and being indicated, or configuring and being configured.

To facilitate an understanding of the technical solutions of the embodiments of this application, the related art of the embodiments of this application is described below. The following related art can be arbitrarily combined with the technical solutions of the embodiments of this application as optional solutions, and they all belong to the scope of protection of the embodiments of this application.

1. Integrated sensing and communications

Wireless communication and sensing (Sensing) are two important applications of modern radio frequency technology. Sensing uses radio waves to detect parameters of a physical environment, so as to implement environmental sensing such as object positioning, movement recognition, and imaging. Conventional sensing and wireless communication exist independently, and the separated design wastes radio spectrum and hardware resources. As people are entering the B5G and 6G era, the communication spectrum is moving toward millimeter wave, terahertz, and visible light communications, and the future wireless communication spectrum will overlap with the conventional sensing spectrum. The integrated sensing and communications technology integrates the two functions of wireless communication and sensing, such that the sensing function can be realized by using wireless resources of wireless communication; sensing services in a wider range can be realized by using widely deployed cellular networks; higher sensing accuracy can be realized by performing joint sensing by using a base station and a plurality of terminals; and the sensing function can be realized by reusing hardware modules of wireless communication, to reduce costs. In short, the integrated sensing and communications technology enables future wireless communication systems to have sensing capabilities, thereby providing a foundation for the development of future smart transportation, smart city, smart factory, drones, and other services.

Sensing can be classified into eight modes as shown in FIG. 2A to FIG. 2H.

Mode 1 shown in FIG. 2A is sensing based on transmission and reception of a base station alone. A transmitting node of a channel/signal used for sensing (such as a sensing channel/signal) is a base station (such as a gNB). After the base station sends the sensing signal (Sensing signal), the sensing signal is reflected by a sensed object, and the reflected signal (Reflected signal) returns to the base station (it can also be considered that the sensing signal returns to the base station). The base station is both the transmitting node of the sensing channel/signal and a receiving node of the sensing channel/signal.

Mode 2 shown in FIG. 2B is sensing based on transmission and reception of a terminal alone. The transmitting node of the sensing channel/signal is a terminal device. After the terminal device sends the sensing signal (Sensing signal), the sensing signal is reflected by the sensed object, and the reflected signal (Reflected signal) returns to the terminal device (it can also be considered that the sensing signal returns to the terminal device). The terminal device is both the transmitting node of the sensing channel/signal and the receiving node of the sensing channel/signal.

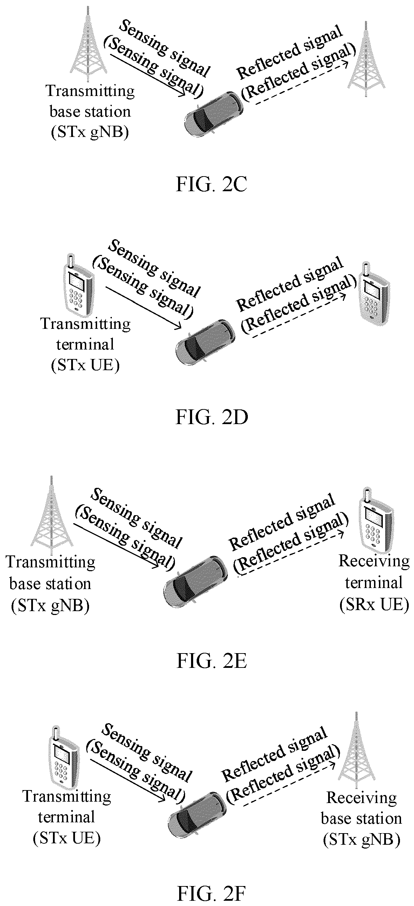

Mode 3 shown in FIG. 2C is base station collaborative sensing. The transmitting node of the sensing channel/signal is a base station (such as a gNB). After the base station sends the sensing signal (Sensing signal), the sensing signal is reflected by the sensed object, and the reflected signal (Reflected signal) is transmitted to another base station (it can also be considered that the sensing signal is transmitted to another base station). The another base station is the receiving node of the sensing channel/signal.

Mode 4 shown in FIG. 2D is terminal collaborative sensing. The transmitting node of the sensing channel/signal is a terminal device. After the terminal device sends the sensing signal (Sensing signal), the sensing signal is reflected by the sensed object, and the reflected signal (Reflected signal) is transmitted to another terminal device (it can also be considered that the sensing signal is transmitted to another terminal device). The another terminal device is the receiving node of the sensing channel/signal.

Mode 5 shown in FIG. 2E is base station-terminal collaborative sensing. The transmitting node of the sensing channel/signal is a base station (such as a gNB). After the base station sends the sensing signal (Sensing signal), the sensing signal is reflected by the sensed object, and the reflected signal (Reflected signal) is transmitted to a terminal device (it can also be considered that the sensing signal is transmitted to a terminal device). The terminal device is the receiving node of the sensing channel/signal.

Mode 6 shown in FIG. 2F is terminal-base station collaborative sensing. The transmitting node of the sensing channel/signal is a terminal device. After the terminal device sends the sensing signal (Sensing signal), the sensing signal is reflected by the sensed object, and the reflected signal (Reflected signal) is transmitted to a base station (it can also be considered that the sensing signal is transmitted to a base station). The base station is the receiving node of the sensing channel/signal.

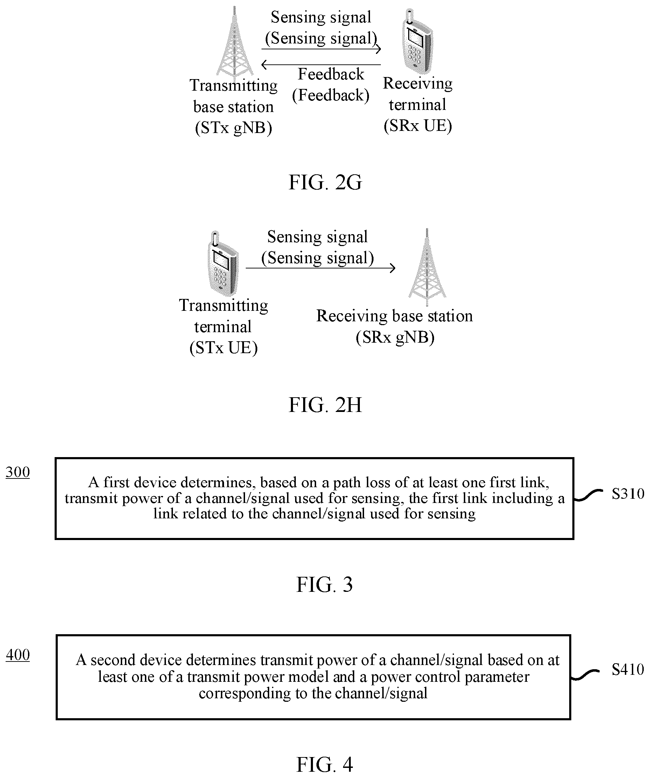

In Mode 7 shown in FIG. 2H, the sensed object is the transmitting node of the sensing channel/signal. For example, a terminal device sends the sensing signal (Sensing signal) to a base station (such as a gNB) as the sensed object, and the base station (such as the gNB) receives the sensing signal and senses the terminal device.

In Mode 8 shown in FIG. 2G, the sensed object is the receiving node of the sensing channel/signal. For example, a base station (such as a gNB) sends the sensing signal (Sensing signal), and a terminal device is the receiving node of the sensing channel/signal. After receiving the sensing signal, the terminal device sends a feedback signal (Feedback) to the base station.

2. Power control

In a communication system, in order to overcome the near-far effect such that signal strengths of signals from different transmitting ends do not differ significantly from each other when the signals reach a receiving end, and to suppress interference between intra-frequency cells, power control may be performed on the transmitting end. For example, a fifth-generation mobile communication technology (5th Generation Mobile Communication Technology, 5G) new radio (NR, New Radio) system supports an uplink power control function for an uplink channel (such as a physical uplink control channel (PUCCH, Physical Uplink Control Channel), a physical uplink shared channel (PUSCH, Physical Uplink Shared Channel) and an uplink signal (such as a channel sounding signal (SRS, Sounding Reference Signal) or the like). Meanwhile, 5G Sidelink also supports control of transmit power of a channel and a signal (such as a physical sidelink shared channel (PSSCH, Physical Sidelink Shared Channel), a physical sidelink control channel (PSCCH, Physical Sidelink Control Channel), or the like) of a transmitting-end device.

Both a transmit power model for the NR uplink channel/signal and a transmit power model for the sidelink channel/signal are computed based on path loss estimation of a single link, which is either a downlink path loss or a sidelink path loss. Power is controlled is to overcome the near-far effect such that strengths of signals from different transmitting ends are substantially the same when the signals reach the receiving end. Therefore, for the NR Uu interface, the downlink path loss can be used to represent a path loss subjected to by the uplink channel/signal transmission; and for the NR PC5 interface, the sidelink path loss can be used to represent the path loss. This is because both the transmission of the Uu interface uplink channel/signal and the transmission of the PC5 interface channel/signal are subjected to only a path loss of a single link.

However, for the channel/signal used for sensing, the path loss cannot be represented by directly using a path loss of a specific link. Taking the sensing modes described above as an example, for the sensing modes 1 and 2, the channel/signal used for sensing needs to be subjected to a bidirectional link path loss from the sensing signal transmitting end to the sensed object, and from the sensed object to the sensing signal transmitting end; for the sensing modes 3 to 6, the channel/signal used for sensing needs to be subjected to path losses of two different links, namely, a path loss of a link from the sensing signal transmitting end to the sensed object, and a path loss of a link from the sensed object to the sensing signal receiving end. Therefore, the transmit power model of the channel/signal used for communication (or referred to as the communication channel/signal) is no longer applicable to a transmit power determining method of the channel/signal used for sensing. If the transmit power model is completely reused, transmission energy of the channel/signal used for sensing may be too low, resulting in failing to complete a sensing task or affecting the sensing accuracy.

An embodiment of this application provides a power control method. FIG. 3 is an implementation flowchart of a power control method 300 according to this application. The method includes the following step S310.

In step S310, a first device determines, based on a path loss of at least one first link, transmit power of a channel/signal used for sensing, the first link being a link related to the channel/signal used for sensing.

In some implementations, the first device may include a transmitting device of the channel/signal used for sensing.

"At least one" in this embodiment of this application may be expressed as one or a plurality, and "a plurality" may be at least two. In the subsequent embodiments, "at least one" may have the same meaning, which is not emphasized hereinafter again.

In some implementations, the channel/signal used for sensing may include at least one of a sensing channel/-signal, a reflected or refracted channel/signal corresponding to the sensing channel/signal, a control channel/signal/information corresponding to the sensing channel/signal, a measurement result feedback channel/signal/information corresponding to the sensing channel/signal, a sensing result feedback channel/signal/information corresponding to the sensing channel/signal, or another channel/signal related to the sensing channel/signal.

In some implementations, the first link (such as a link related to the channel/signal used for sensing) may include a link involved in transmission of the channel/signal used for sensing. For example, two ends of the link related to the channel/signal used for sensing may include at least one of a transmitting device of the channel/signal used for sensing, a receiving device of the channel/signal used for sensing, a sensed object, or a sensing control node. For example, the first link may include any link involved in FIG. 2A to FIG. 2E. Specifically, the first link may include a link from the transmitting base station of the channel/signal used for sensing to the sensed object in FIG. 2A, or a link from the sensed object to the transmitting base station of the channel/signal used for sensing in FIG. 2A. Alternatively, the first link may include a link from the transmitting terminal of the channel/signal used for sensing to the sensed object in FIG. 2B, or a link from the sensed object to the transmitting terminal of the channel/signal used for sensing in FIG. 2B. Alternatively, the first link may include a link from the transmitting base station of the channel/signal used for sensing to the sensed object in FIG. 2C, or a link from the sensed object to the receiving base station of the channel/signal used for sensing in FIG. 2C. Alternatively, the first link may include a link from the transmitting terminal of the channel/signal used for sensing to the sensed object in FIG. 2D, or a link from the sensed object to the receiving terminal of the channel/signal used for sensing in FIG. 2D. Alternatively, the first link may include a link from the transmitting base station of the channel/signal used for sensing to the sensed object in FIG. 2E, or a link from the sensed object to the receiving terminal of the channel/signal used for sensing in FIG. 2E. Alternatively, the first link may include a link from the transmitting terminal of the channel/signal used for sensing to the sensed object in FIG. 2F, or a link from the sensed object to the receiving terminal of the channel/signal used for sensing in FIG. 2E. Alternatively, the first link may include a link from the transmitting base station of the channel/signal used for sensing to the receiving terminal of the channel/signal used for sensing in FIG. 2G, or a link from the receiving terminal of the channel/signal used for sensing to the transmitting base station of the channel/signal used for sensing in FIG. 2G. Alternatively, the first link may include a link from the transmitting terminal of the channel/signal used for sensing to the receiving base station of the channel/signal used for sensing in FIG. 2H.

In addition, the first device may have a corresponding signal used for sensing and a corresponding channel used for sensing. Accordingly, the transmit power of the channel/signal used for sensing that is determined by the first device in this embodiment of this application may be transmit power of the signal and/or channel used for sensing.

In some implementations, a link type of the at least one first link may include at least one of the following:

a link from the first device to a sensed object;
a link from the sensed object to the first device;
a link from the sensed object to a receiving device of the channel/signal used for sensing;
a link from the receiving device of the channel/signal used for sensing to the sensed object;
a link from the first device to the receiving device of the channel/signal used for sensing; or
a link from the receiving device of the channel/signal used for sensing to the first device.

In other words, each of the at least one first link may have any one of the above link types, and link types of different first links may be the same or different.

Further, after determining the transmit power of the channel/signal used for sensing, the first device may further send, by using the transmit power of the channel/signal used for sensing, the channel/signal used for sensing.

There are various application scenarios, such as an outdoor/wide-area/local-area scenario and an indoor/local-area scenario. For example, in a smart city scenario of the outdoor/wide-area/local-area scenario, sensing may be used for weather detection; in a smart transportation/high-speed rail scenario, sensing may be used for high-definition map construction, road supervision, intrusion detection, and the like; and in a low-altitude scenario, sensing may be used for unmanned aerial vehicle monitoring and obstacle avoidance, flight intrusion detection, flight path management, and the like. For another example, in a smart home scenario of the indoor/local-area scenario, sensing may be used for breath monitoring, intrusion detection, gesture/posture recognition, motion detection, movement trajectory tracking, and the like; and in a smart factory scenario, sensing may be used for intrusion detection, material probing, item defect detection, and the like. "Sensing" has a broad meaning, and may also be referred to as positioning, detection, speed measurement, ranging, recognition, or the like. The sensing-related content such as the "sensing channel/signal" and the "channel/signal used for sensing" in this embodiment of this application is applicable to the various application scenarios mentioned above, and "sensing" can be replaced by a related name such as positioning, detection, speed measurement, ranging, or recognition.

In some implementations, the first device may be a sensing node, for example, the network device or the terminal device that sends the channel/signal used for sensing in the foregoing sensing mode 1/2. Alternatively, the first device may be a sensing transmitting node, for example, the network device or the terminal device that sends the channel/signal used for sensing in the foregoing sensing modes 3 to 6.

In some implementations, the first link may be the link from the first device to the sensed object, or the link from the sensed object to the first device. For example, the first link may be the link from the first device (the network device or the terminal device) to the sensed object or the link from the sensed object to the first device (the network device or the terminal device) in the sensing mode 1/2. The directions of these two links are opposite to each other, and conditions/channels that the two links are subjected to are highly correlated in a short period of time. For example, the first link is the link from the first device (the network device or the terminal device) to the sensed object in the sensing modes 3 to 6.

In some other implementations, the first link may be the link from the sensed object to the receiving device of the channel/signal used for sensing, or the link from the receiving device of the channel/signal used for sensing to the sensed object. For example, the first link is the link from the sensed object to the receiving device (the network device or the terminal device) of the channel/signal used for sensing in the sensing modes 3 to 6. Since the sensed signal is reflected by the sensed object, the sensed signal after reflection may also be referred to as a reflected signal.

In some other implementations, the first link may be the link from the first device to the receiving device of the channel/signal used for sensing, or the link from the receiving device of the channel/signal used for sensing to the first device. For example, the first link is the link from the sensing transmitting node to the sensing receiving node in the sensing modes 3 to 6 (not shown in the figures). Taking Mode 5 as an example, the first link may be the link from the terminal device to the network device, or the link from the network device to the terminal device in FIG. 2E.

The path loss of the first link may be determined based on a reference signal corresponding to the first link. Taking the sensing mode 3 as an example, the first link is the link from the first device to the receiving device of the channel/signal used for sensing. In this case, the first device may send a relevant reference signal, and the receiving device of the channel/signal used for sensing may receive the reference signal and determine the path loss of the first link. Alternatively, the first device sends a relevant reference signal, the receiving device of the channel/signal used for sensing measures information such as reference signal received power (RSRP, Reference Signal Receiving Power)/reference signal received quality (RSRQ, Reference Singnal Received Quality)/signal to interference plus noise ratio (SINR, Signal to Interference plus Noise Ratio) of the reference signal and feeds back the information such as the RSRP/RSRQ/SINR to the first device, and then the first device determines the path loss of the first link based on the information such as the RSRP/RSRQ/SINR of the reference signal. Alternatively, the receiving device of the channel/signal used for sensing sends a relevant reference signal, and the first device receives the reference signal and determines the path loss of the first link. Alternatively, the receiving device of the channel/signal used for sensing sends a relevant reference signal, the first device measures information such as RSRP/RSRQ/SINR of the reference signal and feeds back the information such as the RSRP/RSRQ/SINR to the control node (for example, the sensing control node), and the control node determines the path loss of the first link based on the information such as the RSRP/RSRQ/SINR of the reference signal.

It can be seen that in the various cases mentioned above, the first link is related to the channel/signal used for sensing. Therefore, in this embodiment of this application, the transmit power of the channel/signal used for sensing may be determined based on the path loss of the first link.

A first implementation of determining, based on the path loss of the first link, the transmit power of the channel/signal used for sensing may include the following implementations

In some implementations, the first device determines, based on the path loss of the at least one first link and a transmit power model, the transmit power of the channel/signal used for sensing.

In some implementations, the transmit power model may be expressed in the form of a formula, and the specific expression form will be described in detail in the subsequent embodiments.

In some specific implementations, in a case that the at least one first link includes only one first link, the first device determines, based on a path loss of the one first link and the transmit power model, the transmit power of the channel/signal used for sensing; or in a case that the at least one first link is a plurality of first links, the first device determines, based on a sum of path losses of the plurality of first links and the transmit power model, the transmit power of the channel/signal used for sensing.

A second implementation of determining, based on the path loss of the first link, the transmit power of the channel/signal used for sensing may include the following implementations.

In some implementations, the first device determines, based on the path loss of the at least one first link and correction factors corresponding to some or all of the at least one first link, the transmit power of the channel/signal used for sensing.

In some embodiments, the at least one first link includes at least one second link, the second link having a corresponding correction factor. That is, all of the at least one first link may have corresponding correction factors. The correction factor may be used to correct a path loss of the second link to obtain a corrected value of the path loss of the second link.

The first device may determine, based on the corrected value of the path loss of the at least one second link, the transmit power of the channel/signal used for sensing.

In some specific embodiments, in a case that the at least one second link includes only one second link, the first device may determine, based on a corrected value of a path loss of the one second link and a transmit power model, the transmit power of the channel/signal used for sensing; or in a case that the at least one second link is a plurality of second links, the first device may determine, based on a sum of corrected values of path losses of the plurality of second links and a transmit power model, the transmit power of the channel/signal used for sensing.

In some other embodiments, the at least one first link includes at least one second link and at least one third link, where the second link has a corresponding correction factor, and the third link has no corresponding correction factor. That is, one part of the at least one first link may have corresponding correction factors, and the other part may have no corresponding correction factors. The correction factor may be used to correct a path loss of the second link to obtain a corrected value of the path loss of the second link.

The first device may determine, based on a path loss of the at least one third link and the corrected value of the path loss of the at least one second link, the transmit power of the channel/signal used for sensing.

In some specific embodiments, the first device determines, based on a sum of the path loss of the at least one third link and the corrected value of the path loss of the at least one second link as well as a transmit power model, the transmit power of the channel/signal used for sensing.

The correction factor of the first link (or the second link) may be agreed upon by a protocol, or configured or indicated by a control node. Correction factors corresponding to different first links (or second links) may be independent of each other. For example, the control node may configure or indicate different correction factors for different first links at the granularity of the first link. In some implementations, the control node may configure or indicate the correction factor corresponding to the first link (or the second link) through higher-layer signaling or physical-layer control signaling.

A third implementation of determining, based on the path loss of the first link, the transmit power of the channel/signal used for sensing may include the following implementations.

In some implementations, the first device determines, based on at least one first value, the transmit power of the channel/signal used for sensing, each of the at least one first value being determined based on a path loss of the first link corresponding to the first value. For example, each first link has a path loss, and a first value corresponding to the first link may be determined based on the path loss of the first link.

The first device determines, based on the at least one first value and correction factors corresponding to some or all of the at least one value, the transmit power of the channel/signal used for sensing.

In some specific embodiments, the at least one first value includes at least one second value, the second value having a corresponding correction factor. That is, all of the at least one first value may have corresponding correction factors. The correction factor may be used to correct the corresponding second value to obtain a corrected value of the second value.

The first device may determine, based on the corrected value of the at least one second value, the transmit power of the channel/signal used for sensing.

In some specific embodiments, in a case that the at least one second value includes only one second value, the first device determines, based on a corrected value of the one second value and a transmit power model, the transmit power of the channel/signal used for sensing; or in a case that the at least one second value is a plurality of second values, the first device may determine, based on a sum of corrected values of the plurality of second values and a transmit power model, the transmit power of the channel/signal used for sensing.

In some other specific embodiments, the at least one first value includes at least one second value and at least one third value, the second value having a corresponding correction factor, and the third value having no corresponding correction factor. That is, one part of the at least one first value may have corresponding correction factors, and the other part may have no corresponding correction factors. The correction factor may be used to correct the corresponding second value to obtain a corrected value of the second value.

The first device may determine, based on the corrected value of the at least one second value and the at least one third value, the transmit power of the channel/signal used for sensing.

The first device determines, based on a sum of the at least one third value and the corrected value of the at least one second value as well as a transmit power model, the transmit power of the channel/signal used for sensing.

In some specific embodiments, the first device may determine, based on the at least one first value and a transmit power model, the transmit power of the channel/signal used for sensing.

In some specific embodiments, in a case that the at least one first value includes only one first value, the first device may determine, based on the first value and a transmit power model, the transmit power of the channel/signal used for sensing; or

in a case that the at least one first value is a plurality of first values, the first device may determine, based on a sum of the plurality of first values and a transmit power model, the transmit power of the channel/signal used for sensing.

The correction factor of the first value (or the second value) may be agreed upon by a protocol, or configured or indicated by a control node. The correction factors corresponding to different first values (or second values) may be independent of each other. In some implementations, the control node may configure or indicate the correction factor corresponding to the first value (or the second value) through higher-layer signaling or physical-layer control signaling.

**Embodiment 1**

Taking the sensing mode 1/2 as an example, the sensing node (which may be referred to as a first node) sends the channel/signal used for sensing, which is then reflected by the sensed object (which may be referred to as a second node), and the sensing node receives the channel/signal used for sensing that is sent by the sensing node. The first link may be a link from the first node to the second node (hereinafter referred to as a link A), or a link from the second node to the first node (hereinafter referred to as a link B). The directions of the link A and the link B are opposite to each other, and conditions/channels that the links A and B are subjected to are highly correlated in a short period of time. Therefore, the transmit power of the channel/signal used for sensing is determined based on twice a path loss of the link A or twice a path loss of the link B. For example, the path loss of the first link (such as the link A or the link B) is corrected using a correction factor of N = 2, and then the transmit power of the channel/signal used for sensing is determined based on a corrected value of the path loss of the first link and a transmit power model.

The transmit power model may be expressed by a formula. For example, a possible transmit power model is as shown in formula (1):

$$P_{\text{sensing}} = min \left( P_{\text{CMAX}}, P_{\text{O}} + 10 \, log_{10} \left( 2^{\mu} \cdot M_{\text{RB}}^{\text{sensing}}(i) \right) + \alpha \cdot PL \right) \ [\text{dBm}] \qquad (1)$$

where $P_{\text{sensing}}$ represents the transmit power of the channel/signal used for sensing;

$P_{\text{CMAX}}$ represents maximum output power configured for or supported by the sensing transmitting node;

$P_{\text{O}}$ represents an open-loop power control parameter, which may be understood as target power;

$\mu$ indicates another parameter, such as a cyclic prefix (CP, Cyclic Prefix) length;

$M_{\text{RB}}^{\text{sensing}}(i)$ represents a bandwidth of the channel/signal used for sensing, expressed by a number of RBs; i represents an identifier or a sequence number of a transmission occasion (transmission occasion) of the channel/signal used for sensing;

$\alpha$ represents an open-loop power control parameter, which may be understood as a compensation for a path loss; and PL represents a path loss of a link.

In this embodiment of this application, the path loss of the first link is corrected using the correction factor, and the transmit power of the channel/signal used for sensing may be determined using formula (2):

$$P_{\text{sensing}} = min \left( P_{\text{CMAX}}, P_{\text{O}} + 10 \, log_{10} \left( 2^{\mu} \cdot M_{\text{RB}}^{\text{sensing}}(i) \right) + \alpha \cdot N \cdot PL1 \right) \ [\text{dBm}] \qquad (2)$$

where

$PL1$ represents the path loss of the first link;

N represents the correction factor corresponding to the first link, and N is a positive integer, such as 2 in the above example;

$N \cdot PL1$ represents the corrected value of the path loss of the first link; and

for the meanings of other symbols, one may refer to the above description regarding formula (1).

The above formula (2) is only an example of the transmit power model. The form and content of the transmit power model are not limited in the embodiments of this application. For example, in the transmit power model expressed by formula (2), there may further be a closed-loop power control part, or there may be more than two parts of parameters in the min function, such as $P_{\text{sensing}} = min(P_{\text{CMAX}}, P1, P2, P3)$ or $P_{\text{sensing}} = min(P_{\text{CMAX}}, P1, P2, ..., Pn)$. For another example, the part, such as P0 or $10 \, log_{10} \left( 2^{\mu} \cdot M_{\text{RB}}^{\text{sensing}}(i) \right)$, of the transmit power model expressed by the above formula (2) may not be included, or may be expressed in another form. This embodiment only focuses on the expression of the path loss part, such as the $\alpha \cdot N \cdot PL1$ part in formula (2).

Alternatively, in this embodiment of this application, the transmit power of the channel/signal used for sensing may be determined using the path loss of the at least one first link. For example, the transmit power of the channel/signal used for sensing may be determined using formula (2'):

$$P_{\text{sensing}} = min\left(P_{\text{CMAX}}, P_{\text{O}} + 10\,log_{10}\left(2^{\mu} \cdot M_{\text{RB}}^{\text{sensing}}(i)\right) + \alpha \cdot PL1\right) \text{ [dBm]} \qquad (2')$$

where $PL1$ represents the path loss of the first link; and
for the meanings of other symbols, one may refer to the above description regarding formula (1).

**Embodiment 2**

Taking the sensing modes 3 to 6 as an example, the channel/signal used for sensing reuses a communication channel/signal between the sensing node (such as the first node) and the sensing receiving node (which may be referred to as a third node), that is, there is a link C from the first node to the third node, and the link C is the first link in this embodiment of this application. A path loss of the link C is PL3, and PL3 may be measured based on a relevant reference signal between the first node and the third node. That is, when the channel/signal used for sensing is used for communication, a path loss that the channel/signal is subjected to is PL3; and when the channel/signal used for sensing is used for sensing, a path loss that the channel/signal is subjected to is a sum of a path loss from the first node to the second node (which may be denoted as PL1) and a path loss from the second node to the third node (which may be denoted as PL2). Therefore, the path loss PL3 of the link C may be corrected by using the correction factor corresponding to the link C, that is, the transmit power of the channel/signal used for sensing may be determined using formula (3):

$$P_{\text{sensing}} = min\left(P_{\text{CMAX}}, P_{\text{O}} + 10\,log_{10}\left(2^{\mu} \cdot M_{\text{RB}}^{\text{sensing}}(i)\right) + \alpha \cdot \beta \cdot PL3\right) \text{ [dBm]} \qquad (3)$$

where

$PL3$ represents the path loss of the first link;
$\beta$ represents the correction factor corresponding to the first link, and a value of $\beta$ may be a decimal or a fraction, for example, the value of $\beta$ may be a decimal or a fraction between 1 and 2;
$\beta \cdot PL3$ represents the corrected value of the path loss of the first link; and
for the meanings of other symbols, one may refer to the above description regarding formula (1).

The above formula (3) is only an example of the transmit power model. The form and content of the transmit power model are not limited in the embodiments of this application. For example, in the transmit power model expressed by formula (3), there may further be a closed-loop power control part, or there may be more than two parts of parameters in the min function, such as $P_{\text{sensing}} = min(P_{\text{CMAX}}, P1, P2, P3)$ or $P_{\text{sensing}} = min(P_{\text{CMAX}}, P1, P2, ..., Pn)$. For another example, the part, such as P0 or $10\,log_{10}\left(2^{\mu} \cdot M_{\text{RB}}^{\text{sensing}}(i)\right)$, of the transmit power model expressed by the above formula (3) may not be included, or may be expressed in another form. This embodiment only focuses on the expression of the path loss part, such as the $\alpha \cdot \beta \cdot PL3$ part in formula (3).

It can be seen that in the above two examples, the correction factor is used to correct the path losses of different first links.

**Embodiment 3**

In some implementations, among the plurality of first links for which the first device determines the transmit power of the channel/signal used for sensing, some first links have corresponding correction factors, and the other first links have no corresponding correction factors. In this case, the first device may perform different processing for different situations, for example:

the first device determines, based on the corrected value of the path loss of the first link and/or the path loss of the first link, the transmit power of the channel/signal used for sensing. The corrected value of the path loss of the first link is determined by the path loss of the first link and the correction factor corresponding to the first link.

For example, in a case that the first link has a corresponding correction factor, the first device determines or obtains the corrected value of the path loss of the first link; and in a case that the first link has no corresponding correction factor, the first device determines or obtains the path loss of the first link.

The first device determines, based on the corrected value of the path loss of the first link (these first links have corresponding correction factors) and/or the path loss of the first link (these first links have no corresponding correction factors), the transmit power of the channel/signal used for sensing.

Specifically, the first device may determine, based on a sum of corrected values of path losses of the first links and/or path losses of the first links and the transmit power model, the transmit power of the channel/signal used for sensing.

Alternatively, in a case that none of the first links has corresponding correction factors, the first device may determine, based on a sum of the path loss of the at least one first link and the transmit power model, the transmit power of the channel/signal used for sensing.

In a case that there is only one first link and the first link has no corresponding correction factor, the first device determines, based on a path loss of the first link and the transmit power model, the transmit power of the channel/signal used for sensing. In a case that there is only one first link and the first link has a corresponding correction factor, the first device determines, based on a corrected value of a path loss of the first link and the transmit power model, the transmit power of the channel/signal used for sensing.

For example, taking the sensing modes 3 to 6 as an example, the link from the sensing node (such as the first node) to the sensed object (such as the second node) is a link A1, and a path loss of the link A1 is PL1; and the link from the sensed object (such as the second node) to the sensing receiving node (such as the third node) is a link A2, and a path loss of the link A2 is PL2.

In an example, the first device (namely, the first node) corrects the path loss of the first link using the correction factor, and the transmit power of the channel/signal used for sensing may be determined using formula (4):

$$P_{\text{sensing}} = min \left( P_{\text{CMAX}}, P_{\text{O}} + 10 \, log_{10} \left( 2^{\mu} \cdot M_{\text{RB}}^{\text{sensing}}(i) \right) + \alpha \cdot (PL1 + PL2) \right) \; [\text{dBm}] \qquad (4)$$

where PL1 and PL2 represent the path losses of the two first links, respectively; and
for the meanings of other symbols, one may refer to the above description regarding formula (1).

In this example, if neither of the two first links has a corresponding correction factor, the transmit power of the channel/signal used for sensing is determined using a sum of the path losses of the two first links and the transmit power model.

In another example, the first device (namely, the first node) corrects the path loss of the first link using the correction factor, and the transmit power of the channel/signal used for sensing may be determined using formula (5):

$$P_{\text{sensing}} = min \left( P_{\text{CMAX}}, P_{\text{O}} + 10 \, log_{10} \left( 2^{\mu} \cdot M_{\text{RB}}^{\text{sensing}}(i) \right) + (\alpha 1 \cdot PL1 + \alpha 2 \cdot PL2) \right) \quad [\text{dBm}]$$

$$(5)$$

where $\alpha 1 \cdot PL1 + \alpha 2 \cdot PL2$ in formula (5) may be represented by $\alpha \cdot$ (n $\cdot$ PL1 + PL2), where n represents the correction factor corresponding to the link with the path loss of PL1, and the link with the path loss of PL2 has no correction factor; or $\alpha 1 \cdot PL1 + \alpha 2 \cdot PL2$ in formula (5) may be represented by $\alpha \cdot$ (PL1 + p $\cdot$ PL2), where p represents the correction factor corresponding to the link with the path loss of PL2, and the link with the path loss of PL1 has no correction factor; or $\alpha 1 \cdot PL1 + \alpha 2 \cdot PL2$ in formula (5) may be represented by $\alpha \cdot$ (n $\cdot$ PL1 + p $\cdot$ PL2), where n represents the correction factor corresponding to the link with the path loss of PL1, and p represents the correction factor corresponding to the link with the path loss of PL2;
or $\alpha 1 \cdot PL1 + \alpha 2 \cdot PL2$ in formula (5) may be represented by $\alpha \cdot$ m $\cdot$ (PL1 + PL2), where m represents the correction factors corresponding to the link with the path loss of PL1 and the link with the path loss of PL2.

For the meanings of other symbols in formula (5), one may refer to the above description regarding formula (1).

From the above example, it can be seen that with the correction factor, different first link can correspond to independent $\alpha$ (that is, a compensation for the path loss, such as an open-loop power control parameter).

Specifically, as in the sensing modes 3 to 6, the sensing transmitting node (the first node) sends the channel/signal used for sensing, which is then reflected by the sensed object (the second node), and the sensing receiving node (the third node) receives the channel/signal used for sensing that is sent by the first node. In this case, the transmit power of the channel/signal used for sensing may be determined based on the path loss of the link 1 (that is, the link from the first node to the second node) and the path loss of the link 2 (that is, the link from the second node to the third node), for example, the transmit power is determined directly based on the sum of PL1 and PL2. Alternatively, the link 1 and the link 2 may use different open-loop power control parameters, such as $\alpha$; in this case, different open-loop power control parameters may be applied to the different first links by using the correction factors corresponding to the first links, for example, by using the transmit power model shown in the above formula (4) or (5). It should be noted that formula (4) or (5) is only an example of two transmit power models. For example, in the transmit power model expressed by formula (4) or (5), there may further be a closed-loop power control part, or there may be more than two parts of parameters in the min function, such as $P_{\text{sensing}} = min(P_{\text{CMAX}}, P1, P2, P3)$ or $P_{\text{sensing}} = min(P_{\text{CMAX}}, P1, P2, ..., Pn)$. For another example, the part, such as P0 or $10\,log_{10}\left(2^{\mu} \cdot M_{\text{RB}}^{\text{sensing}}(i)\right)$, of the transmit power model expressed by the above formula (4) or (5) may not be included, or may be expressed in another form. This embodiment only focuses on the expression of the path loss part, such as the $\alpha \cdot (PL1 + PL2)$ part in formula (4) or the $\alpha1 \cdot PL1 + \alpha2 \cdot PL2$ part in formula (5).

In addition, the measurement of the path loss of the link 1/link 2 may be determined based on the measurement of a related reference signal. For example, a related reference signal of the link 1 may be sent by the first device (or the first node) and measured by the second device (or the second node), or may be sent by the second device and measured by the first device; and a related reference signal of the link 2 may be sent by the second device and measured by the third device (or the third node), or may be sent by the third device and measured by the second device.

Alternatively, in this embodiment of this application, the transmit power of the channel/signal used for sensing may be determined using the path loss of the at least one first link. For example, the transmit power of the channel/signal used for sensing may be determined using formula (5'):

$$P_{\text{sensing}} = min\left(P_{\text{CMAX}}, P_{\text{O}} + 10\,log_{10}\left(2^{\mu} \cdot M_{\text{RB}}^{\text{sensing}}(i)\right) + (PL1 + PL2)\right) \text{ [dBm]} \qquad (5')$$

where PL1 and PL2 represent the path losses of the two first links, respectively; and
for the meanings of other symbols, one may refer to the above description regarding formula (1).

In the foregoing embodiments 1 to 3, the first device determines, based on the path loss of the first link, the transmit power of the channel/signal used for sensing, or determines, based on the path loss of the first link and the corresponding correction factor, the transmit power of the channel/signal used for sensing. In the subsequent embodiments, the first device determines, based on a first value determined by the path loss of the first link, the transmit power of the channel/signal used for sensing. For example, the first device determines, based on the at least one first value, the transmit power of the channel/signal used for sensing, each of the at least one first value being determined based on the path loss of the corresponding first link.

The first device may determine, based on the at least one first value and correction factors corresponding to some or all of the at least one first value, the transmit power of the channel/signal used for sensing. The correction factor may be used to correct the corresponding first value to obtain a corrected value of the first value.

Specifically, the first value may be determined based on at least one of: the path loss of the corresponding first link, the transmit power model, a power control parameter, or a frequency domain resource occupied by the channel/signal used for sensing.

The first value is an intermediate value used to determine the transmit power of the channel/signal used for sensing. The transmit power of the channel/signal used for sensing may be determined by using a plurality of first values. Different first values correspond to different first links.

The first value may be determined in multiple manners. For example, the first value is calculated using the transmit power model, and a calculation parameter used for calculating the first value may include at least one of the path loss of the first link, the power control parameter, or the frequency domain resource occupied by the channel/signal used for sensing. The specific calculation formulas will be described in detail in the subsequent embodiments 4 to 6.

The correction factor may be used to correct the first value to obtain a corrected value of the first value. In some implementations, among a plurality of first values determined by the path losses of the plurality of first links, if some first values have corresponding correction factors and the other first values have no corresponding correction factors, that is, some first values have corresponding corrected values and the other first values have no corresponding corrected values, the first device may determine, based on a sum of the corrected values of the first values and/or the first values and the transmit power model, the transmit power of the channel/signal used for sensing.

In some other implementations, among the plurality of first values determined by the path losses of the plurality of first links, if none of the first values have corresponding correction factors, that is, none of the first values have corresponding corrected values, the first device may determine, based on a sum of the at least one first value and/or the transmit power model, the transmit power of the channel/signal used for sensing.

In a case that there is only one first value and the first value has no corresponding correction factor, the first device determines, based on the first value and the transmit power model, the transmit power of the channel/signal used for sensing. In a case that there is only one first value and the first value has a corresponding correction factor, the first device determines, based on a corrected value of the first value and the transmit power model, the transmit power of the channel/signal used for sensing.

Specific embodiments are described in detail below.

**Embodiment 4**

Sensing modes to which this embodiment is applied are similar to those to which Embodiment 1 is applied. Taking the application in the sensing mode 1/2 as an example, the sensing node (which may be referred to as a first node) sends the channel/signal used for sensing, which is then reflected by the sensed object (which may be referred to as a second node), and the sensing node receives the channel/signal used for sensing that is sent by the sensing node. The first link may be a link from the first node to the second node (hereinafter referred to as a link A), or a link from the second node to the first node (hereinafter referred to as a link B). The directions of the link A and the link B are opposite to each other, and conditions/channels that the links A and B are subjected to are highly correlated in a short period of time. In this embodiment, the first value (such as P1) may be determined based on the path loss (for example, denoted by PL1) of the first link. For example, the first value is determined using the path loss of the first link and the transmit power model, and is corrected using a correction factor. For example, the correction factor is denoted by N, and a value of N may be 2.

For example, the transmit power of the channel/signal used for sensing may be determined using formula (6):

$$P_{\text{sensing}} = min(P_{\text{CMAX}}, N * P1) \ [\text{dBm}] \qquad (6)$$

where

$$P1 = P_{\text{O}} + 10\,log_{10}\left(2^{\mu} \cdot M_{\text{RB}}^{\text{sensing}}(i)\right) + \alpha \cdot PL1$$

$PL1$ represents the path loss of the first link;
P1 represents the first value determined by the path loss of the first link;
N represents the correction factor corresponding to the first value, and N may be a positive integer, such as 2 in the above example;
N * $P1$ represents the corrected value of the first value; and
for the meanings of other symbols, one may refer to the above description regarding formula (1).

The above formula (6) is only an example of the transmit power model. The form and content of the transmit power model are not limited in the embodiments of this application. For example:

The part, such as P0 or $10\,log_{10}\left(2^{\mu} \cdot M_{\text{RB}}^{\text{sensing}}(i)\right)$, of the transmit power model expressed by formula (6) may not be included, or may be expressed in another form. This embodiment only focuses on the expression of the path loss part, such as the $\alpha \cdot PL1$ part in formula (6). For example, in formula (6), $P1 = P_{\text{O}} + \alpha \cdot PL1$, or $P1 = \alpha \cdot PL1$, or the like.

The part, such as P0 or $10\,log_{10}\left(2^{\mu} \cdot M_{\text{RB}}^{\text{sensing}}(i)\right)$, that does not exist in P1 may also be added to the corresponding part of $P_{\text{sensing}}$, as shown in formula (6').

For another example, in the transmit power model expressed by formula (6), there may further be a closed-loop power control part, or there may be more than two parts of parameters in the min function, such as $P_{\text{sensing}} = min(P_{\text{CMAX}}, P1, P2, P3)$ or $P_{\text{sensing}} = min(P_{\text{CMAX}}, P1, P2, ..., Pn)$.

For another example, the transmit power of the channel/signal used for sensing may be determined using formula (6'):

$$P_{\text{sensing}} = min\left(P_{\text{CMAX}}, 10\,log_{10}\left(2^{\mu} \cdot M_{\text{RB}}^{\text{sensing}}(i)\right) + N * P1\right) \qquad (6')$$

where

$$P1 = P_{\text{O}} + \alpha \cdot PL1;$$

$PL$1 represents the path loss of the first link;

P1 represents the first value determined by the path loss of the first link;

N represents the correction factor corresponding to the first value, and N may be a positive integer, such as 2 in the above example;

N * $P$1 represents the corrected value of the first value; and

for the meanings of other symbols, one may refer to the above description regarding formula (1).

**Embodiment 5**

Sensing modes to which this embodiment is applied are similar to those to which Embodiment 2 is applied. Taking the sensing modes 3 to 6 as an example, the channel/signal used for sensing reuses a communication channel/signal between the sensing node (such as the first node) and the sensing receiving node (which may be referred to as a third node), that is, there is a link C from the first node to the third node, and the link C is the first link in this embodiment of this application. A path loss of the link C is PL3, and PL3 may be measured based on a relevant reference signal between the first node and the third node. The first value may be determined using the path loss PL3 of the link C and the transmit power model, and is corrected using the correction factor. For example, the transmit power of the channel/signal used for sensing may be determined using formula (7):

$$P_{\text{sensing}} = min(P_{\text{CMAX}}, \beta * P1) \ [\text{dBm}] \qquad (7)$$

where

$$P1 = P_{\text{O}} + 10 \, log_{10}\left(2^{\mu} \cdot M_{\text{RB}}^{\text{sensing}}(i)\right) + \alpha \cdot PL3$$

$PL$3 represents the path loss of the first link;

$\beta$ represents the correction factor corresponding to the first link, and a value of $\beta$ may be a decimal or a fraction, for example, the value of $\beta$ may be a decimal or a fraction between 1 and 2;

$\beta \cdot P$1 represents the corrected value of the first value; and

for the meanings of other symbols, one may refer to the above description regarding formula (1).

The above formula (7) is only an example of the transmit power model. The form and content of the transmit power model are not limited in the embodiments of this application. For example, the part, such as P0 or $10 \, log_{10}\left(2^{\mu} \cdot M_{\text{RB}}^{\text{sensing}}(i)\right)$, of the transmit power model expressed by formula (7) may not be included, or may be expressed in another form. This embodiment only focuses on the expression of the path loss part, such as the $\alpha \cdot$ PL3 part in formula (7). For example, in formula (7), $P1 = P_{\text{O}} + \alpha \cdot$ PL3, or P1 = $\alpha \cdot$ PL3. The part, such as $P$0 or $10 \, log_{10}\left(2^{\mu} \cdot M_{\text{RB}}^{\text{sensing}}(i)\right)$, that does not exist in P1 may also be added to the corresponding part of $P_{\text{sensing}}$, as shown in formula (7'). For another example, in the transmit power model expressed by formula (7), there may further be a closed-loop power control part, or there may be more than two parts of parameters in the min function, such as $P_{\text{sensing}} = min(P_{\text{CMAX}}, P1, P2, P3)$ or $P_{\text{sensing}} = min(P_{\text{CMAX}}, P1, P2, ... , Pn)$.

For another example, the transmit power of the channel/signal used for sensing may be determined using formula (7'):

$$P_{\text{sensing}} = min\left(P_{\text{CMAX}}, 10 \, log_{10}\left(2^{\mu} \cdot M_{\text{RB}}^{\text{sensing}}(i)\right) + \beta * P1\right) \ [\text{dBm}] \qquad (7')$$

where

$$P1 = P_{\text{O}} + \alpha \cdot PL3$$

$PL$3 represents the path loss of the first link;

$\beta$ represents the correction factor corresponding to the first link, and a value of $\beta$ may be a decimal or a fraction, for example, the value of $\beta$ may be a decimal or a fraction between 1 and 2;

β · *P*1 represents the corrected value of the first value; and
for the meanings of other symbols, one may refer to the above description regarding formula (1).

It can be seen that in the foregoing Embodiment 4 and Embodiment 5, the correction factor is used to correct the first values determined by the path losses of different first links.

**Embodiment 6**

Sensing modes to which this embodiment is applied are similar to those to which Embodiment 3 is applied. Taking the sensing modes 3 to 6 as an example, the link from the sensing node (such as the first node) to the sensed object (such as the second node) is a link A1, and a path loss of the link A1 is PL1; and the link from the sensed object (such as the second node) to the sensing receiving node (such as the third node) is a link A2, and a path loss of the link A2 is PL2.
In this embodiment, first values (such as P1 and P2) are determined based on the path losses (namely, PL1 and PL2) of the two first links, respectively, and the transmit power of the channel/signal used for sensing is determined using the first values and correction factors corresponding to the first values. For example, the first device (that is, the first node) corrects the path loss of the first link using the correction factor, and the transmit power of the channel/signal used for sensing may be determined using formulas (8) to (11):

$$P_{\text{sensing}} = min\big(P_{\text{CMAX}}, (P1 + P2)\big) \quad [\text{dBm}]; \qquad (8)$$

$$P_{\text{sensing}} = min\big(P_{\text{CMAX}}, \text{x} * (P1 + P2)\big) \quad [\text{dBm}]; \qquad (9)$$

$$P_{\text{sensing}} = min\big(P_{\text{CMAX}}, (y * P1 + P2)\big) \quad [\text{dBm}]; \qquad (10)$$

$$P_{\text{sensing}} = min(P_{\text{CMAX}}, (P1 + z * P2)) \quad [\text{dBm}]; \qquad (11)$$

where

$$P1 = P_{\text{O1}} + 10 \, log_{10} \left( 2^{\mu} \cdot M_{\text{RB}}^{\text{sensing}}(i) \right) + \alpha 1 \cdot PL1)$$

$$P2 = P_{\text{O2}} + 10 \, log_{10} \left( 2^{\mu} \cdot M_{\text{RB}}^{\text{sensing}}(i) \right) + \alpha 2 \cdot PL2)$$

where PL1 and PL2 represent the path losses of the two first links, respectively;
P1 represents the first value determined by the path loss (PL1) of one first link;
P2 represents the first value determined by the path loss (PL2) of the other first link; and
for the meanings of other symbols, one may refer to the above description regarding formula (1).

In formula (8), neither of the two first values (P1 and P2) has a corresponding correction factor.
In formula (9), the correction factors corresponding to the two first values (P1 and P2) are both equal to x, a corrected value of the first value P1 is x * *P*1, and a corrected value of the first value P2 is x * P2.
In formula (10), the correction factor corresponding to the first value P1 is y, and a corrected value of the first value P1 is y* *P*1; and the first value P2 has no corresponding correction factor.
In formula (11), the correction factor corresponding to the first value P2 is z, and a corrected value of the first value P2 is z* *P*2; and the first value P1 has no corresponding correction factor.
It can be seen that the correction factor can be used for correcting different first values to determine the transmit power of the channel/signal used for sensing. In this embodiment of this application, the correction factor of the first value may also be referred to as the correction factor of the first link.
The above formulas (8) to (11) are only examples of the transmit power model. The form and content of the transmit power model are not limited in the embodiments of this application. For example, the part, such as $P_{\text{O1}}$, $P_{\text{O2}}$, or

$$10 \, log_{10} \left( 2^{\mu} \cdot M_{\text{RB}}^{\text{sensing}}(i) \right)$$ , of the transmit power models represented by formulas (8) to (11) may not be included, or may be expressed in another form. This embodiment only focuses on the expression of the path loss part, such as the $\alpha1 \cdot PL1$ or $\alpha2 \cdot PL2$ part in formulas (8) to (11). For example, in formulas (8) to (11), $P1 = P_{O1} + \alpha1 \cdot PL1$, or $P1 = \alpha1 \cdot PL1$, or $P2 = P_{O2} + \alpha2 \cdot PL2$, or $P2 = \alpha2 \cdot PL2$. The part, such as $P0$ or $10\,log_{10}\left(2^{\mu} \cdot M_{RB}^{sensing}(i)\right)$, that does not exist in P1 in formulas (8) to (11) may also be added to the corresponding part of $P_{sensing}$, as shown in formulas (8') to (11').

For another example, in the transmit power models expressed by formulas (8) to (11), there may further be a closed-loop power control part, or there may be more than two parts of parameters in the min function, such as $P_{sensing} = min(P_{CMAX}, P1, P2, P3)$ or $P_{sensing} = min(P_{CMAX}, P1, P2, ..., Pn)$.

For another example, the transmit power of the channel/signal used for sensing may be determined using formulas (8') to (11'):

$$P_{sensing} = min\left(P_{CMAX}, 10\,log_{10}\left(2^{\mu} \cdot M_{RB}^{sensing}(i)\right) + (P1 + P2)\right) \quad [dBm] \quad (8')$$

$$P_{sensing} = min\left(P_{CMAX}, 10\,log_{10}\left(2^{\mu} \cdot M_{RB}^{sensing}(i)\right) + x * (P1 + P2)\right) \quad [dBm] \quad (9')$$

$$P_{sensing} = min\left(P_{CMAX}, 10\,log_{10}\left(2^{\mu} \cdot M_{RB}^{sensing}(i)\right) + (y * P1 + P2)\right) \quad [dBm] \quad (10')$$

$$P_{sensing} = min\left(P_{CMAX}, 10\,log_{10}\left(2^{\mu} \cdot M_{RB}^{sensing}(i)\right) + (P1 + z * P2)\right) \quad [dBm] \quad (11')$$

where

$$P1 = P_{O1} + \alpha1 \cdot PL1;$$

$$P2 = P_{O2} + \alpha2 \cdot PL2;$$

PL1 and PL2 represent the path losses of the two first links, respectively;
P1 represents the first value determined by the path loss (PL1) of one first link;
P2 represents the first value determined by the path loss (PL2) of the other first link; and
for the meanings of other symbols, one may refer to the above description regarding formula (1).

It can be seen from the foregoing embodiments that the embodiments of this application provide a new transmit power model designed for the channel/signal used for sensing, and the conventional transmit power model is corrected (for example, by doubling, or adding up a plurality of path losses) based on actual path losses subjected to by the sensing signal in different sensing modes. This can ensure the coverage of the sensing signal, thereby avoiding failing to complete the sensing task or affecting the sensing accuracy due to excessively low transmit power of the channel/signal used for sensing.

This application further provides another power control method. FIG. 4 is an implementation flowchart of a power control method 400 according to this application. The method includes the following step S410.

In step s410, a second device determines transmit power of a channel/signal based on at least one of a transmit power model and a power control parameter corresponding to the channel/signal.

In some implementations, the channel/signal may include at least one of a channel/signal used for sensing, a channel signal used for communication, or a channel/signal used for sensing and communication. Moreover, transmit power models corresponding to different channels/signals may be independent of each other; and/or power control parameters corresponding to different channels/signals may be independent of each other.

In some implementations, the second device may be a transmitting node (such as a first node) of the channel/signal used for sensing. In a case that the second device has both a function of sending a channel/signal used for communication and a function of sending a channel/signal used for sensing, the second device may determine, based on a first transmit power model, transmit power of the channel/signal used for sensing, and determine, based on a second transmit power model, transmit power of the communication channel/signal. In other words, the channel/signal used for communication and the channel/signal used for sensing use independent power models. The channel/signal used for sensing and the channel/signal used for communication may further use independent power control parameters. For example, the power control parameter includes at least one of an open-loop power control parameter (referred to as an open-loop power control parameter), a closed-loop power control parameter (referred to as a closed-loop power control parameter), or a closed-loop power control table (referred to as a closed-loop power control table). The open-loop power control parameter may include: $P_O$ and/or $\alpha$. $P_O$ can be understood as target power, and $\alpha$ can be understood as a compensation for a path loss. The closed-loop power control table includes a part or all of the closed-loop power control table.

For example, the closed-loop power control parameter is a part of the parameters in the transmit power model. A transmit power control model (such as the following formula (12)) of an NR sounding reference signal (SRS, Sounding Reference Signal) is used as an example.

Transmit power of the NR SRS is determined according to the following formula:

$$P_{\text{SRS},b,f,c}(i,q_s,l) = \min\left\{ \begin{array}{l} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{array} \right\}$$

$$[\text{dBm}] \qquad\qquad\qquad (12)$$

where h is the closed-loop power control parameter, which can be classified into accumulated adjustment and absolute adjustment depending on a configuration of a higher-level parameter. An adjustment step is shown in the following table:

| TPC command field (TPC Command Field) | Accumulated (Accumulated) $\delta_{\text{PUSCH},b,f,c}$ or $\delta_{\text{SRS},b,f,c}$ [dB] | Absolute (Absolute) $\delta_{\text{PUSCH},b,f,c}$ or $\delta_{\text{SRS},b,f,c}$ [dB] |
|---|---|---|
| 0 | -1 | -4 |
| 1 | 0 | -1 |
| 2 | 1 | 1 |
| 3 | 3 | 4 |

The foregoing mapping table of the transmit power control (TPC, Transmission Power Control) command field is a closed-loop power control table. The mapping table of the TPC command field may be carried in downlink control information (DCI, Downlink Control Information). The signal used for sensing and the signal used for communication may separately use the entire table when determining the transmit power. For example, the step of an adjustment amount in the table may be different, and the number of TPC states may also be different. Alternatively, the signal used for sensing and the signal used for communication may separately use a column of the table when determining the transmit power, such as a column of the table representing the absolute adjustment amount (such as the third column of the above table), or a column of the table representing the accumulated adjustment amount (such as the second column of the above table).

It should be noted that the transmit power model used in the above process may include not only one transmit power model, but may include a set of transmit power models. For example, the model for determining the transmit power of the channel/signal used for sensing is a set of transmit power models (including one or more transmit power models), while the model for determining the transmit power of the communication channel/signal is another set of transmit power models (including one or more transmit power models). The model for determining the transmit power of the channel/signal used for sensing and the model for determining the transmit power of the communication channel/signal are independent of each other, that is, communication and sensing use independent transmit power models.

The channel/signal used for communication and the channel/signal used for sensing use independent power control models and parameters, so that the transmit power can be determined based on performance requirements for communication and sensing, thereby avoiding power waste or power insufficiency caused by reusing the same set of power control models/parameters.

**Embodiment 7**

In this embodiment, the channel/signal used for sensing includes a first channel/signal group, and the channel/signal used for communication includes a second channel/signal group. The first channel/signal group and the second channel/signal group may both include at least one channel/signal. A model of the first device for determining transmit power of a channel/signal in the first channel/signal group is independent of a model for determining transmit power of a channel/signal in the second channel/signal group. For example, the first channel/signal group corresponds to a first set of transmit power models, and the first set of transmit power models may include one or more transmit power models; and the second channel/signal group corresponds to a second set of transmit power models, and the second set of transmit power models may include one or more transmit power models. The first set of transmit power models and the second set of transmit power models are independent of each other, such as transmit power formulas and power control parameters of the first channel/signal group and the second channel/signal group (for example, including at least one of an open-loop power control parameter, a closed-loop power control parameter, and a closed-loop power control table, and including other parameters).

In some implementations, the second device determines the transmit power of the channel/signal based on first transmit power and second transmit power, where the first transmit power is determined by the second device based on at least one of a transmit power model for sensing and the power control parameter corresponding to the channel/signal; and the second transmit power is determined by the second device based on at least one of a transmit power model for communication and the power control parameter corresponding to the channel/signal.

For example, there is a channel/signal that can be used for both communication and sensing. In this case, when the channel/signal is used for sensing, transmit power P1 is determined by using the first set of transmit power models/the first set of open-loop/closed-loop power control parameters ; when the channel/signal is used for communication, transmit power P2 is determined by using the second set of transmit power models/the second set of open-loop/closed-loop power control parameters; and when the channel/signal is used for both communication and sensing, the transmit power is determined by using max{P1, P2} or min{P1, P2}, or by using P1, P2 and another method.

**Embodiment 8**

In this embodiment, the channel/signal used for sensing may correspond to one or more sets of power control parameters. For example, the channel/signal used for sensing includes one or more sets of power control parameters corresponding to the first channel/signal group, different power control parameters correspond to different first parameters, and the first parameter is related to a sensing service or sensing accuracy or a sensing range. Different sensing accuracy requires different numbers of times of transmission, frequency density, bandwidth, or the like of the channel/-signal used for sensing. For example, when the sensing accuracy requirement is high, it is necessary to use a large-bandwidth sensing signal for sensing, or to transmit the sensing signal multiple times for sensing.

For example, the first parameter may include at least one of quality of service (QoS), a priority (Priority), a bearer (Bear), a logical channel, a sensing channel/signal index, or an index of a sensing channel/signal set.

The second device may determine, based on a configuration or indication of a control node, a power control parameter used by the channel/signal used for sensing.

For example, the second device supports multiple sets of open-loop power control parameters and/or closed-loop power control parameters for the channel/signal used for sensing, and the multiple sets of open-loop power control parameters and/or closed-loop power control parameters correspond to different sensing services/sensing accuracy. The sensing service/sensing accuracy described herein is only a schematic expression, and does not exclude any parameters that can correspond to the sensing service/sensing accuracy, such as quality of service (QoS), a priority (Priority), a bearer, a logical channel, a sensing channel/signal (set) index, or the like. The second device may determine the used open-loop/closed-loop power control parameters based on related parameters of the sensing service/accuracy, or may determine the used open-loop/closed-loop power control parameters in response to the indication of the control node (higher-layer signaling or physical-layer control signaling).

In this embodiment of this application, different open-loop/closed-loop power control parameters are configured depending on different sensing services/sensing accuracy, so that services with different sensing requirements can transmit the channel/signal for sensing by using different power, thereby meeting the sensing requirements of different services and avoiding power waste or power insufficiency caused by reusing a set of power control parameters.

Alternatively, the second device may determine, based on at least one of the first parameter, the sensing service, the sensing accuracy, and the sensing range, a power control parameter used by the channel/signal used for sensing.

It should also be noted that the nodes involved in the embodiments of this application include: the transmitting node of the channel/signal used for sensing, the receiving node of the channel/signal used for sensing, the sensed object, and the sensing control node. These nodes may be terminals, base stations, or may be implemented in other forms (that is, the channel/signal used for sensing may be a channel/signal of the Uu interface or a channel/signal of the PC5 interface). Some of these nodes may also be the same node. For example, the transmitting node and the receiving node may be the same node (self-transmitting and self-receiving), the control node may be the same node as the transmitting node or the receiving node, the sensed object may also be the same node as the receiving node, and so on.

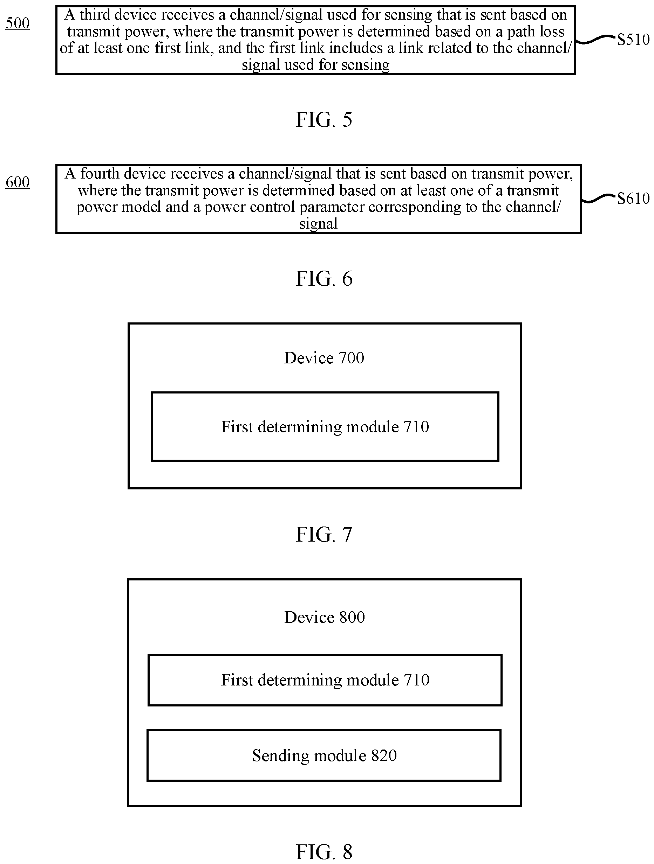

This application further provides a receiving method. FIG. 5 is an implementation flowchart of a receiving method 500 according to this application. The method includes the following step S510.

In step S510, a third device receives a channel/signal used for sensing that is sent based on transmit power, where the transmit power is determined based on a path loss of at least one first link, and the first link includes a link related to the channel/signal used for sensing.

In an implementation, the transmit power is determined based on the path loss of the at least one first link and correction factors corresponding to some or all of the at least one first link.

In another implementation, the transmit power is determined based on at least one first value, each of the at least one first value being determined based on a path loss of the first link corresponding to the first value.

The transmit power may be determined by the third device, or by the first device, or by another device. In a case that the transmit power is determined by the third device or another device, the third device or another device may determine the transmit power using the same or corresponding manner as the first device. For the specific determining manner, one may refer to the relevant details in the foregoing power control method performed by the first device, and details are not described herein again.

This application further provides another receiving method. FIG. 6 is an implementation flowchart of a receiving method 600 according to this application. The method includes the following step S610.

In step S610, a fourth device receives a channel/signal that is sent based on transmit power, where the transmit power is determined based on at least one of a transmit power model and a power control parameter corresponding to the channel/signal.

In an implementation, the channel/signal includes at least one of a channel/signal used for sensing, a channel signal used for communication, or a channel/signal used for sensing and communication.

The transmit power may be determined by the fourth device, or by the second device, or by another device. In a case that the transmit power is determined by the fourth device or another device, the fourth device or another device may determine the transmit power using the same or corresponding manner as the second device. For the specific determining method, one may refer to the relevant details in the foregoing power control method performed by the second device, and details are not described herein again.

FIG. 7 is a schematic block diagram of a device 700 according to an embodiment of this application. The device 700 may include:

a first determining module 710, configured to determine, based on a path loss of at least one first link, transmit power of a channel/signal used for sensing, the first link including a link related to the channel/signal used for sensing.

In an implementation, the first determining module 710 is configured to determine, based on the path loss of the at least one first link and correction factors corresponding to some or all of the at least one first link, the transmit power of the channel/signal used for sensing.

In an implementation, the at least one first link includes at least one second link, the second link having a correction factor, and the correction factor being used to correct a path loss of the corresponding second link to obtain a corrected value of the path loss of the second link.

The first determining module 710 is configured to determine, based on the corrected value of the path loss of the at least one second link, the transmit power of the channel/signal used for sensing.

In an implementation, the first determining module 710 is configured to: in a case that the at least one second link is one second link, determine, based on a corrected value of a path loss of the one second link and a transmit power model, the transmit power of the channel/signal used for sensing; or

in a case that the at least one second link is a plurality of second links, determine, based on a sum of corrected values of path losses of the plurality of second links and a transmit power model, the transmit power of the channel/signal used for sensing.

In an implementation, the at least one first link includes at least one second link and at least one third link, the second link having a corresponding correction factor, the correction factor being used to correct a path loss of the corresponding second link to obtain a corrected value of the path loss of the second link, and the third link does not have the correction factor.

The first determining module 710 is configured to determine, based on a path loss of the at least one third link and the corrected value of the path loss of the at least one second link, the transmit power of the channel/signal used for sensing.

In an implementation, the first determining module 710 is configured to determine, based on a sum of the path loss of the at least one third link and the corrected value of the path loss of the at least one second link as well as a transmit power model, the transmit power of the channel/signal used for sensing.

In an implementation, the first determining module 710 is configured to determine, based on the path loss of the at least one first link and a transmit power model, the transmit power of the channel/signal used for sensing.

In an implementation, the first determining module 710 is configured to:

in a case that the at least one first link is one first link, determine, based on a path loss of the one first link and the transmit power model, the transmit power of the channel/signal used for sensing; or

in a case that the at least one first link is a plurality of first links, determine, based on a sum of path losses of the plurality of first links and the transmit power model, the transmit power of the channel/signal used for sensing.

In an implementation, the first determining module 710 is configured to determine, based on at least one first value, the transmit power of the channel/signal used for sensing, each of the at least one first value being determined based on a path loss of the first link corresponding to the first value.

In an implementation, the first determining module 710 is configured to determine, based on the at least one first value and correction factors corresponding to some or all of the at least one value, the transmit power of the channel/signal used for sensing.

In an implementation, the at least one first value includes at least one second value, the second value having a correction factor, and the correction factor being used to correct the corresponding second value to obtain a corrected value of the second value.

The first determining module 710 is configured to determine, based on the corrected value of the at least one second value, the transmit power of the channel/signal used for sensing.

In an implementation, the first determining module 710 is configured to:

in a case that the at least one second value is one second value, determine, based on a corrected value of the one second value and a transmit power model, the transmit power of the channel/signal used for sensing; or
in a case that the at least one second value is a plurality of second values, determine, based on a sum of corrected values of the plurality of second values and a transmit power model, the transmit power of the channel/signal used for sensing.

In an implementation, the at least one first value includes at least one second value and at least one third value, the second value having a correction factor, the correction factor being used to correct the corresponding second value to obtain a corrected value of the second value, and the third value does not have the correction factor.

The first determining module 710 is configured to determine, based on the at least one third value and the corrected value of the at least one second value, the transmit power of the channel/signal used for sensing.

In an implementation, the first determining module 710 is configured to determine, based on a sum of the at least one third value and the corrected value of the at least one second value as well as a transmit power model, the transmit power of the channel/signal used for sensing.

In an implementation, the first determining module 710 is configured to determine, based on the at least one first value and a transmit power model, the transmit power of the channel/signal used for sensing.

In an implementation, the first determining module 710 is configured to: in a case that the at least one first value is one first value, determine, based on the one first value and a transmit power model, the transmit power of the channel/signal used for sensing; or
in a case that the at least one first value is a plurality of first values, determine, based on a sum of the plurality of first values and a transmit power model, the transmit power of the channel/signal used for sensing.

In an implementation,

the correction factor is agreed upon by a protocol; and/or
the correction factor is configured or indicated by a control node.

In an implementation, the correction factors corresponding to different first links are independent of each other.

In an implementation, the correction factors corresponding to different first values are independent of each other.

In an implementation, the first value is determined based on at least one of the path loss of the first link corresponding to the first value, the transmit power model, a power control parameter, or a frequency domain resource occupied by the channel/signal used for sensing.

FIG. 8 is a schematic block diagram of a device 800 according to an embodiment of this application. The device 800 includes one or more features of the foregoing device 700 embodiment. In a possible implementation, in this embodiment of this application, the device further includes:

a sending module 820, configured to send, based on the transmit power of the channel/signal used for sensing, the channel/signal used for sensing.

In an implementation, a link type of the at least one first link includes at least one of the following:

a link to a sensed object;
a link from the sensed object to the device;
a link from the sensed object to a receiving device of the channel/signal used for sensing;
a link from the receiving device of the channel/signal used for sensing to the sensed object;
a link from the first device to the receiving device of the channel/signal used for sensing; or
a link from the receiving device of the channel/signal used for sensing to the device.

In an implementation, the path loss of the first link is determined based on a reference signal corresponding to the first link.

The device 800 in this embodiment of this application can implement the corresponding functions of the first device in the foregoing method embodiment. For the procedures, functions, implementations, and beneficial effects corresponding to the modules (submodules, units, components, or the like) in the device 800, one may refer to the corresponding description in the foregoing method embodiment, and details are not described herein again. It should be noted that the functions described regarding the various modules (submodules, units, components, or the like) in the device 700 and the device 800 in the embodiments of this application may be implemented by different modules (submodules, units, components, or the like) or by the same module (submodule, unit, component, or the like). The device 700 and the device 800 in the embodiments of this application may include the transmitting device of the channel/signal used for sensing.

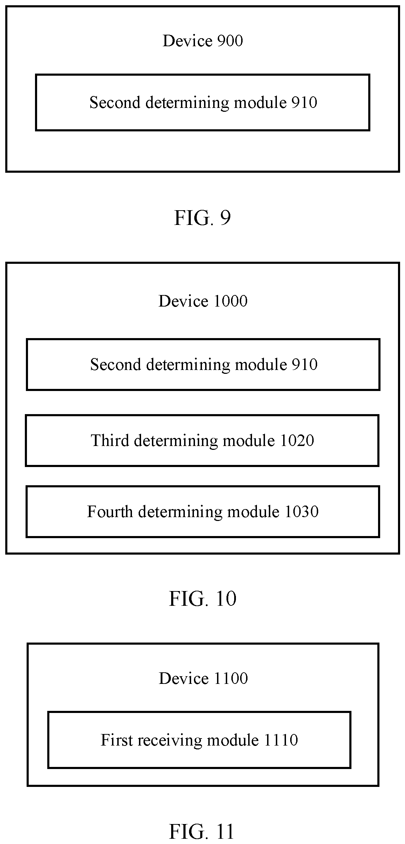

FIG. 9 is a schematic block diagram of a device 900 according to an embodiment of this application. The device 900 may include:

a second determining module 910, configured to determine transmit power of a channel/signal based on at least one of a transmit power model and a power control parameter corresponding to the channel/signal.

In an implementation, the channel/signal includes at least one of a channel/signal used for sensing, a channel signal used for communication, or a channel/signal used for sensing and communication.

In an implementation, transmit power models corresponding to different channels/signals are independent of each other; and/or power control parameters corresponding to different channels/signals are independent of each other.

In an implementation, the channel/signal used for sensing corresponds to one or more sets of power control parameters.

In an implementation, different power control parameters correspond to different first parameters, and the first parameter corresponds to or is related to a sensing service or sensing accuracy or a sensing range.

In an implementation, the first parameter includes at least one of quality of service (QoS), a priority, a bearer, a logical channel, a sensing channel/signal index, or an index of a sensing channel set/signal set.

FIG. 10 is a schematic block diagram of a device 1000 according to an embodiment of this application. The device 1000 includes one or more features of the foregoing device 900. In a possible implementation of this embodiment of this application, the device further includes:

a third determining module 1020, configured to determine, based on a configuration or indication of a control node, a power control parameter used by the channel/signal used for sensing.

In an implementation, the device further includes:

a fourth determining module 1030, configured to determine, based on at least one of the first parameter, the sensing service, the sensing accuracy, and the sensing range, a power control parameter used by the channel/signal used for sensing.

In an implementation, in a case that the channel/signal is the channel/signal used for sensing and communication, the second determining module 910 is configured to:

determine the transmit power of the channel/signal based on first transmit power and second transmit power, where the first transmit power is determined based on at least one of a transmit power model for sensing and the power control parameter corresponding to the channel/signal; and
the second transmit power is determined based on at least one of a transmit power model for communication and the power control parameter corresponding to the channel/signal.

In an implementation, the second determining module 910 is configured to determine larger power between the first transmit power and the second transmit power as the transmit power of the channel/signal.

In an implementation, the power control parameter includes at least one of an open-loop power control parameter, a closed-loop power control parameter, or a closed-loop power control table.

The devices 900 and 1000 in the embodiments of this application can implement the corresponding functions of the second device in the foregoing method embodiment. For the procedures, functions, implementations, and beneficial effects corresponding to the modules (submodules, units, components, or the like) in the device 900 or 1000, one may refer to the corresponding description in the foregoing method embodiment, and details are not described herein again. It should be noted that the functions described regarding the various modules (submodules, units, components, or the like) in the device 1000 in this embodiment of this application may be implemented by different modules (submodules, units, components, or the like) or by the same module (submodule, unit, component, or the like). The device 900 or 1000 in the embodiment of this application may include a device for sending the channel/signal.

FIG. 11 is a schematic block diagram of a device 1100 according to an embodiment of this application. The device 1100 may include:

a first receiving module 1100, configured to receive a channel/signal used for sensing that is sent based on transmit power, where the transmit power is determined based on a path loss of at least one first link, and the first link includes a link related to the channel/signal used for sensing.

In an implementation, the transmit power is determined based on the path loss of the at least one first link and correction factors corresponding to some or all of the at least one first link.

In an implementation, the transmit power is determined based on at least one first value, each of the at least one first value being determined based on a path loss of the first link corresponding to the first value.

The device 1100 in this embodiment of this application can implement the corresponding functions of the third device in the foregoing method embodiment. For the procedures, functions, implementations, and beneficial effects corresponding to the modules (submodules, units, components, or the like) in the device 1100, one may refer to the corresponding description in the foregoing method embodiment, and details are not described herein again. It should be noted that the functions described regarding the various modules (submodules, units, components, or the like) in the device 1100 in this embodiment of this application may be implemented by different modules (submodules, units, components, or the like) or by the same module (submodule, unit, component, or the like). The device 1100 in this embodiment of this application may include a device for receiving the channel/signal used for sensing.

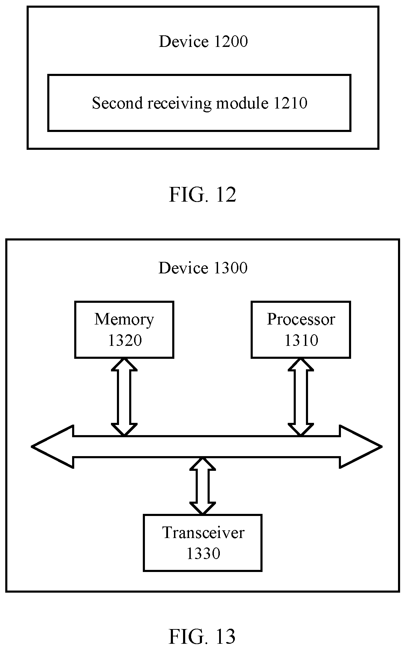

FIG. 12 is a schematic block diagram of a device 1200 according to an embodiment of this application. The device 1200 may include:

a second receiving module 1200, configured to receive a channel/signal that is sent based on transmit power, where the transmit power is determined based on at least one of a transmit power model and a power control parameter corresponding to the channel/signal.

In an implementation, the channel/signal includes at least one of a channel/signal used for sensing, a channel/signal used for communication, or a channel/signal used for sensing and communication.

The device 1200 in this embodiment of this application can implement the corresponding functions of the fourth device in the foregoing method embodiment. For the procedures, functions, implementations, and beneficial effects corresponding to the modules (submodules, units, components, or the like) in the device 1200, one may refer to the corresponding description in the foregoing method embodiment, and details are not described herein again. It should be noted that the functions described regarding the various modules (submodules, units, components, or the like) in the device 1200 in this embodiment of this application may be implemented by different modules (submodules, units, components, or the like) or by the same module (submodule, unit, component, or the like). The device 1200 in this embodiment of this application may include a device for receiving the channel/signal.

FIG. 13 is a schematic diagram of a structure of a device 1300 according to an embodiment of this application. The device 1300 includes a processor 1310, and the processor 1310 can call and run a computer program from a memory 1320, such that the device 1300 implements the method in the embodiments of this application.

In an implementation, the device 1300 may further include the memory 1320. The processor 1310 can call and run a computer program from the memory 1320, such that the device 1300 implements the method in the embodiments of this application.

The memory 1320 may be a component independent of the processor 1310 or may be integrated into the processor 1310.

In an implementation, the device 1300 may further include a transceiver 1330, and the processor 1310 may control the transceiver 1330 to communicate with another device. Specifically, the transceiver may send information or data to another device, or receive information or data sent by another device.

The transceiver 1330 may include a transmitter and a receiver. The transceiver 1330 may further include an antenna, and there may be one or more antennas.

In an implementation, the device 1300 may include a device for sending a channel/signal used for sensing, and the device 1300 can implement the corresponding procedures implemented by the first device or the second device in the methods described in the embodiments of this application. For the sake of brevity, details are not described herein again.

In an implementation, the device 1300 may include a device for receiving a channel/signal used for sensing, and the device 1300 may implement the corresponding procedures implemented by the third device or the fourth device in the methods described in the embodiments of this application. For the sake of brevity, details are not described herein again.

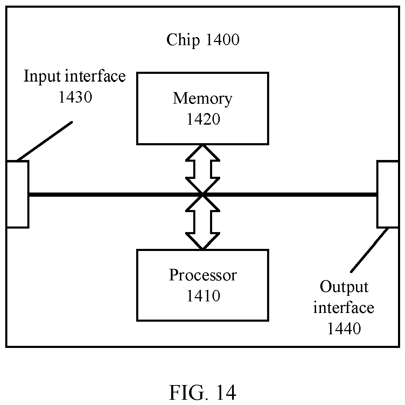

FIG. 14 is a schematic diagram of a structure of a chip 1400 according to an embodiment of this application. The chip 1400 includes a processor 1410, and the processor 1410 can call and run a computer program from a memory, to implement the method in the embodiments of this application.

In an implementation, the chip 1400 may further include a memory 1420. The processor 1410 can call and run a computer program from the memory 1420, to implement the method performed by the first device or the second device in the embodiments of this application.

The memory 1420 may be a component independent of the processor 1410 or may be integrated into the processor 1410.

In an implementation, the chip 1400 may further include an input interface 1430. The processor 1410 may control the input interface 1430 to communicate with another device or chip, and specifically, may obtain information or data sent by another device or chip.

In an implementation, the chip 1400 may further include an output interface 1440. The processor 1410 may control the output interface 1440 to communicate with another device or chip, and specifically, may output information or data to another device or chip.

In an implementation, the chip can be applied to the device in the embodiments of this application, and the chip can implement the corresponding procedures implemented by the first device or the second device in the methods described in the embodiments of this application. For the sake of brevity, details are not described herein again.

The chips applied to the first device and the second device may be the same chip or different chips.

It should be understood that the chip mentioned in this embodiment of this application may also be referred to as a system-on-chip, a system chip, a chip system, a system on a chip, or the like.

The processor mentioned above may be a general-purpose processor, a digital signal processor (digital signal processor, DSP), a field programmable gate array (field programmable gate array, FPGA), an application specific integrated circuit (application specific integrated circuit, ASIC), or another programmable logic device, a transistor logic device, a discrete hardware component, or the like. The general-purpose processor mentioned above may be a microprocessor, or may be any conventional processor or the like.

The memory mentioned above may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be noted that the foregoing memory is schematic rather than restrictive. For example, the memory in the embodiments of this application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), or the like. In other words, the memory in the embodiments of this application is intended to include but not be limited to these and any other suitable types of memories.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (Digital Subscriber Line, DSL)) manner or a wireless (such as infrared, wireless, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD), or the like.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

It may be clearly understood by a person skilled in the art that, for the purpose of convenient and brief description, for a detailed working process of the foregoing system, apparatus, and unit, one may refer to a corresponding process in the foregoing method embodiments. Details are not described herein again.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

**Claims**

1. A power control method, comprising:
determining, by a first device based on a path loss of at least one first link, transmit power of a channel/signal used for sensing, the first link comprising a link related to the channel/signal used for sensing.

2. The method according to claim 1, wherein the determining, by a first device based on a path loss of at least one first link, transmit power of a channel/signal used for sensing comprises:
determining, by the first device based on the path loss of the at least one first link and correction factors corresponding to some or all of the at least one first link, the transmit power of the channel/signal used for sensing.

3. The method according to claim 2, wherein the at least one first link comprises at least one second link, the second link having a correction factor, and the correction factor being used to correct a path loss of the corresponding second link to obtain a corrected value of the path loss of the second link, wherein
the determining, by the first device based on the path loss of the at least one first link and correction factors corresponding to some or all of the at least one first link, the transmit power of the channel/signal used for sensing comprises:
determining, by the first device based on the corrected value of the path loss of the at least one second link, the transmit power of the channel/signal used for sensing.

4. The method according to claim 3, wherein the determining, by the first device based on the corrected value of the path loss of the at least one second link, the transmit power of the channel/signal used for sensing comprises:

    in a case that the at least one second link is one second link, determining, by the first device based on a corrected value of a path loss of the one second link and a transmit power model, the transmit power of the channel/signal used for sensing; or
    in a case that the at least one second link is a plurality of second links, determining, by the first device based on a sum of corrected values of path losses of the plurality of second links and a transmit power model, the transmit power of the channel/signal used for sensing.

5. The method according to claim 2, wherein the at least one first link comprises at least one second link and at least one third link, the second link having a correction factor, the correction factor being used to correct a path loss of the corresponding second link to obtain a corrected value of the path loss of the second link, and the third link does not have the correction factor, wherein
the determining, by the first device based on the path loss of the at least one first link and correction factors corresponding to some or all of the at least one first link, the transmit power of the channel/signal used for sensing comprises:
determining, by the first device based on a path loss of the at least one third link and the corrected value of the path loss of the at least one second link, the transmit power of the channel/signal used for sensing.

6. The method according to claim 5, wherein the determining, by the first device based on a path loss of the at least one third link and the corrected value of the path loss of the at least one second link, the transmit power of the channel/signal used for sensing comprises:
determining, by the first device based on a sum of the path loss of the at least one third link and the corrected value of the path loss of the at least one second link as well as a transmit power model, the transmit power of the channel/signal used for sensing.

7. The method according to claim 1, wherein the determining, by a first device based on a path loss of at least one first link, transmit power of a channel/signal used for sensing comprises:
determining, by the first device based on the path loss of the at least one first link and a transmit power model, the transmit power of the channel/signal used for sensing.

8. The method according to claim 7, wherein the determining, by the first device based on the path loss of the at least one first link and a transmit power model, the transmit power of the channel/signal used for sensing comprises:

    in a case that the at least one first link is one first link, determining, by the first device based on a path loss of the one first link and the transmit power model, the transmit power of the channel/signal used for sensing; or
    in a case that the at least one first link is a plurality of first links, determining, by the first device based on a sum of path losses of the plurality of first links and the transmit power model, the transmit power of the channel/signal used for sensing.

9.  The method according to claim 1, wherein the determining, by a first device based on a path loss of at least one first link, transmit power of a channel/signal used for sensing comprises:
    determining, by the first device based on at least one first value, the transmit power of the channel/signal used for sensing, each of the at least one first value being determined based on a path loss of the first link corresponding to the first value.

10. The method according to claim 9, wherein the determining, by the first device based on at least one first value, the transmit power of the channel/signal used for sensing comprises:
    determining, by the first device based on the at least one first value and correction factors corresponding to some or all of the at least one value, the transmit power of the channel/signal used for sensing.

11. The method according to claim 10, wherein the at least one first value comprises at least one second value, the second value having a correction factor, and the correction factor being used to correct the corresponding second value to obtain a corrected value of the second value, wherein
    the determining, by the first device based on the at least one first value and correction factors corresponding to some or all of the at least one value, the transmit power of the channel/signal used for sensing comprises:
    determining, by the first device based on the corrected value of the at least one second value, the transmit power of the channel/signal used for sensing.

12. The method according to claim 11, wherein the determining, by the first device based on the corrected value of the at least one second value, the transmit power of the channel/signal used for sensing comprises:

    in a case that the at least one second value is one second value, determining, by the first device based on a corrected value of the one second value and a transmit power model, the transmit power of the channel/signal used for sensing; or
    in a case that the at least one second value is a plurality of second values, determining, by the first device based on a sum of corrected values of the plurality of second values and a transmit power model, the transmit power of the channel/signal used for sensing.

13. The method according to claim 10, wherein the at least one first value comprises at least one second value and at least one third value, the second value having a correction factor, the correction factor being used to correct the corresponding second value to obtain a corrected value of the second value, and the third value does not have correction factor, wherein
    the determining, by the first device based on the at least one first value and correction factors corresponding to some or all of the at least one value, the transmit power of the channel/signal used for sensing comprises:
    determining, by the first device based on the at least one third value and the corrected value of the at least one second value, the transmit power of the channel/signal used for sensing.

14. The method according to claim 13, wherein the determining, by the first device based on the at least one third value and the corrected value of the at least one second value, the transmit power of the channel/signal used for sensing comprises:
    determining, by the first device based on a sum of the at least one third value and the corrected value of the at least one second value as well as a transmit power model, the transmit power of the channel/signal used for sensing.

15. The method according to claim 9, wherein the determining, by the first device based on at least one first value, the transmit power of the channel/signal used for sensing comprises:
    determining, by the first device based on the at least one first value and a transmit power model, the transmit power of the channel/signal used for sensing.

16. The method according to claim 15, wherein the determining, by the first device based on the at least one third value and a transmit power model, the transmit power of the channel/signal used for sensing comprises:

    in a case that the at least one first value is one first value, determining, by the first device based on the one first value and a transmit power model, the transmit power of the channel/signal used for sensing; or
    in a case that the at least one first value is a plurality of first values, determining, by the first device based on a sum of the plurality of first values and a transmit power model, the transmit power of the channel/signal used for sensing.

17. The method according to any one of claims 2 to 6 or 10 to 16, wherein

    the correction factor is agreed upon by a protocol; and/or
    the correction factor is configured or indicated by a control node.

18. The method according to any one of claims 2 to 6, wherein the correction factors corresponding to different first links are independent of each other.

19. The method according to any one of claims 10 to 14, wherein the correction factors corresponding to different first values are independent of each other.

20. The method according to any one of claims 9 to 16, wherein the first value being determined based on a path loss of the first link corresponding to the first value comprises:
the first value being determined based on at least one of: the path loss of the first link corresponding to the first value, the transmit power model, a power control parameter, or a frequency domain resource occupied by the channel/signal used for sensing.

21. The method according to any one of claims 1 to 20, further comprising:
sending, by the first device by using the transmit power of the channel/signal used for sensing, the channel/signal used for sensing.

22. The method according to any one of claims 1 to 21, wherein a link type of the at least one first link comprises at least one of the following:

    a link from the first device to a sensed object;
    a link from the sensed object to the first device;
    a link from the sensed object to a receiving device of the channel/signal used for sensing;
    a link from the receiving device of the channel/signal used for sensing to the sensed object;
    a link from the first device to the receiving device of the channel/signal used for sensing; or
    a link from the receiving device of the channel/signal used for sensing to the first device.

23. The method according to claim 22, wherein the path loss of the first link is determined based on a reference signal corresponding to the first link.

24. A power control method, comprising:
determining, by a second device, transmit power of a channel/signal based on at least one of a transmit power model and a power control parameter corresponding to the channel/signal.

25. The method according to claim 24, wherein the channel/signal comprises at least one of a channel/signal used for sensing, a channel/signal used for communication, or a channel/signal used for sensing and communication.

26. The method according to claim 25, wherein transmit power models corresponding to different channels/signals are independent of each other; and/or power control parameters corresponding to different channels/signals are independent of each other.

27. The method according to claim 25 or 26, wherein the channel/signal used for sensing corresponds to one or more sets of power control parameters.

28. The method according to claim 27, wherein different power control parameters correspond to different first parameters, and the first parameter corresponds to or is related to a sensing service or sensing accuracy or a sensing range.

29. The method according to claim 28, wherein the first parameter comprises at least one of quality of service QoS, a priority, a bearer, a logical channel, a sensing channel/signal index, or an index of a sensing channel set/signal set.

**30.** The method according to any one of claims 25 to 29, further comprising:
determining, by the second device based on a configuration or indication of a control node, a power control parameter used by the channel/signal used for sensing.

**31.** The method according to claim 28 or 29, further comprising:
determining, by the second device based on at least one of the first parameter, the sensing service, the sensing accuracy and the sensing range, a power control parameter used by the channel/signal used for sensing.

**32.** The method according to claim 25, wherein in a case that the channel/signal is the channel/signal used for sensing and communication, the determining, by a second device, transmit power of a channel/signal based on at least one of a transmit power model and a power control parameter corresponding to the channel/signal comprises:

determining, by the second device, the transmit power of the channel/signal based on first transmit power and second transmit power, wherein
the first transmit power is determined by the second device based on at least one of a transmit power model for sensing and the power control parameter corresponding to the channel/signal; and
the second transmit power is determined by the second device based on at least one of a transmit power model for communication and the power control parameter corresponding to the channel/signal.

**33.** The method according to claim 32, wherein the determining, by the second device, the transmit power of the channel/signal based on first transmit power and second transmit power comprises:
determining, by the second device, larger power between the first transmit power and the second transmit power as the transmit power of the channel/signal.

**34.** The method according to any one of claims 24 to 33, wherein the power control parameter comprises at least one of an open-loop power control parameter, a closed-loop power control parameter, or a closed-loop power control table.

**35.** A receiving method, comprising:
receiving, by a third device, a channel/signal used for sensing that is sent based on transmit power, wherein the transmit power is determined based on a path loss of at least one first link, and the first link comprises a link related to the channel/signal used for sensing.

**36.** The method according to claim 35, wherein
the transmit power is determined based on the path loss of the at least one first link and correction factors corresponding to some or all of the at least one first link.

**37.** The method according to claim 35, wherein
the transmit power is determined based on at least one first value, each of the at least one first value being determined based on a path loss of the first link corresponding to the first value.

**38.** A receiving method, comprising:
receiving, by a fourth device, a channel/signal that is sent based on transmit power, wherein the transmit power is determined based on at least one of a transmit power model and a power control parameter corresponding to the channel/signal.

**39.** The method according to claim 38, wherein the channel/signal comprises at least one of a channel/signal used for sensing, a channel signal used for communication, or a channel/signal used for sensing and communication.

**40.** A device, comprising:
a first determining module, configured to determine, based on a path loss of at least one first link, transmit power of a channel/signal used for sensing, the first link comprising a link related to the channel/signal used for sensing.

**41.** The device according to claim 40, wherein the first determining module is configured to determine, based on the path loss of the at least one first link and correction factors corresponding to some or all of the at least one first link, the transmit power of the channel/signal used for sensing.

**42.** The device according to claim 41, wherein the at least one first link comprises at least one second link, the second link having a correction factor, and the correction factor being used to correct a path loss of the corresponding second link to obtain a corrected value of the path loss of the second link, wherein
the first determining module is configured to determine, based on the corrected value of the path loss of the at least one second link, the transmit power of the channel/signal used for sensing.

43. The device according to claim 42, wherein the first determining module is configured to: in a case that the at least one second link is one second link, determine, based on a corrected value of a path loss of the one second link and a transmit power model, the transmit power of the channel/signal used for sensing; or
in a case that the at least one second link is a plurality of second links, determine, based on a sum of corrected values of path losses of the plurality of second links and a transmit power model, the transmit power of the channel/signal used for sensing.

44. The device according to claim 41, wherein the at least one first link comprises at least one second link and at least one third link, the second link having a correction factor, the correction factor being used to correct a path loss of the corresponding second link to obtain a corrected value of the path loss of the second link, and the third link does not have the correction factor , wherein
the first determining module is configured to determine, based on a path loss of the at least one third link and the corrected value of the path loss of the at least one second link, the transmit power of the channel/signal used for sensing.

45. The device according to claim 44, wherein the first determining module is configured to determine, based on a sum of the path loss of the at least one third link and the corrected value of the path loss of the at least one second link as well as a transmit power model, the transmit power of the channel/signal used for sensing.

46. The device according to claim 40, wherein the first determining module is configured to determine, based on the path loss of the at least one first link and a transmit power model, the transmit power of the channel/signal used for sensing.

47. The device according to claim 46, wherein the first determining module is configured to:

in a case that the at least one first link is one first link, determine, based on a path loss of the one first link and the transmit power model, the transmit power of the channel/signal used for sensing; or
in a case that the at least one first link is a plurality of first links, determine, based on a sum of path losses of the plurality of first links and the transmit power model, the transmit power of the channel/signal used for sensing.

48. The device according to claim 40, wherein the first determining module is configured to determine, based on at least one first value, the transmit power of the channel/signal used for sensing, each of the at least one first value being determined based on a path loss of the first link corresponding to the first value.

49. The device according to claim 48, wherein the first determining module is configured to determine, based on the at least one first value and correction factors corresponding to some or all of the at least one value, the transmit power of the channel/signal used for sensing.

50. The device according to claim 49, wherein the at least one first value comprises at least one second value, the second value having a correction factor, and the correction factor being used to correct the corresponding second value to obtain a corrected value of the second value, wherein
the first determining module is configured to determine, based on the corrected value of the at least one second value, the transmit power of the channel/signal used for sensing.

51. The device according to claim 50, wherein the first determining module is configured to:

in a case that the at least one second value is one second value, determine, based on a corrected value of the one second value and a transmit power model, the transmit power of the channel/signal used for sensing; or
in a case that the at least one second value is a plurality of second values, determine, based on a sum of corrected values of the plurality of second values and a transmit power model, the transmit power of the channel/signal used for sensing.

52. The device according to claim 49, wherein the at least one first value comprises at least one second value and at least one third value, the second value having a correction factor, the correction factor being used to correct the corresponding second value to obtain a corrected value of the second value, and the third value does not have the correction factor, wherein
the first determining module is configured to determine, based on the at least one third value and the corrected value of the at least one second value, the transmit power of the channel/signal used for sensing.

53. The device according to claim 52, wherein the first determining module is configured to determine, based on a sum of the at least one third value and the corrected value of the at least one second value as well as a transmit power model, the transmit power of the channel/signal used for sensing.

54. The device according to claim 48, wherein the first determining module is configured to determine, based on the at least one first value and a transmit power model, the transmit power of the channel/signal used for sensing.

55. The device according to claim 54, wherein the first determining module is configured to: in a case that the at least one first value is one first value, determine, based on the one first value and a transmit power model, the transmit power of the channel/signal used for sensing; or
in a case that the at least one first value is a plurality of first values, determine, based on a sum of the plurality of first values and a transmit power model, the transmit power of the channel/signal used for sensing.

56. The device according to any one of claims 41 to 45 or 49 to 55, wherein

the correction factor is agreed upon by a protocol; and/or
the correction factor is configured or indicated by a control node.

57. The device according to any one of claims 41 to 45, wherein the correction factors corresponding to different first links are independent of each other.

58. The device according to any one of claims 49 to 55, wherein the correction factors corresponding to different first values are independent of each other.

59. The device according to any one of claims 48 to 55, wherein the first value is determined based on at least one of: the path loss of the first link corresponding to the first value, the transmit power model, a power control parameter, or a frequency domain resource occupied by the channel/signal used for sensing.

60. The device according to any one of claims 40 to 59, further comprising:
a sending module, configured to send, based on the transmit power of the channel/signal used for sensing, the channel/signal used for sensing.

61. The device according to any one of claims 40 to 60, wherein a link type of the at least one first link comprises at least one of the following:

a link to a sensed object;
a link from the sensed object to the device;
a link from the sensed object to a receiving device of the channel/signal used for sensing;
a link from the receiving device of the channel/signal used for sensing to the sensed object;
a link to the receiving device of the channel/signal used for sensing; or
a link from the receiving device of the channel/signal used for sensing to the device.

62. The device according to claim 61, wherein the path loss of the first link is determined based on a reference signal corresponding to the first link.

63. A device, comprising:
a second determining module, configured to determine transmit power of a channel/signal based on at least one of a transmit power model and a power control parameter corresponding to the channel/signal.

64. The device according to claim 63, wherein the channel/signal comprises at least one of a channel/signal used for sensing, a channel/signal used for communication, or a channel/signal used for sensing and communication.

65. The device according to claim 64, wherein transmit power models corresponding to different channels/signals are independent of each other; and/or power control parameters corresponding to different channels/signals are independent of each other.

66. The device according to claim 64 or 65, wherein the channel/signal used for sensing corresponds to one or more sets of power control parameters.

67. The device according to claim 66, wherein different power control parameters correspond to different first parameters, and the first parameter corresponds to or is related to a sensing service or sensing accuracy or a sensing range.

68. The device according to claim 67, wherein the first parameter comprises at least one of: quality of service QoS, a priority, a bearer, a logical channel, a sensing channel/signal index, or an index of a sensing channel set/signal set.

69. The device according to any one of claims 64 to 68, further comprising:
a third determining module, configured to determine, based on a configuration or indication of a control node, a power control parameter used by the channel/signal used for sensing.

70. The device according to claim 67 or 68, further comprising:
a fourth determining module, configured to determine, based on at least one of the first parameter, the sensing service, the sensing accuracy and the sensing range, a power control parameter used by the channel/signal used for sensing.

71. The device according to claim 64, wherein in a case that the channel/signal is the channel/signal used for sensing and communication, the second determining module is configured to:

determine the transmit power of the channel/signal based on first transmit power and second transmit power, wherein
the first transmit power is determined based on at least one of a transmit power model for sensing and the power control parameter corresponding to the channel/signal; and
the second transmit power is determined based on at least one of a transmit power model for communication and the power control parameter corresponding to the channel/signal.

72. The device according to claim 71, wherein the second determining module is configured to determine larger power between the first transmit power and the second transmit power as the transmit power of the channel/signal.

73. The device according to claim 72, wherein the power control parameter comprises at least one of an open-loop power control parameter, a closed-loop power control parameter, or a closed-loop power control table.

74. A device, comprising:
a first receiving module, configured to receive a channel/signal used for sensing that is sent based on transmit power, wherein the transmit power is determined based on a path loss of at least one first link, and the first link comprises a link related to the channel/signal used for sensing.

75. The device according to claim 74, wherein
the transmit power is determined based on the path loss of the at least one first link and correction factors corresponding to some or all of the at least one first link.

76. The device according to claim 74, wherein
the transmit power is determined based on at least one first value, each of the at least one first value being determined based on a path loss of the first link corresponding to the first value.

77. A device, comprising:
a second receiving module, configured to receive a channel/signal that is sent based on transmit power, wherein the transmit power is determined based on at least one of a transmit power model and a power control parameter corresponding to the channel/signal.

78. The device according to claim 77, wherein the channel/signal comprises at least one of a channel/signal used for sensing, a channel signal used for communication, or a channel/signal used for sensing and communication.

79. A device, comprising: a processor and a memory, wherein the memory is configured to store a computer program, and the processor is configured to call and run the computer program stored in the memory, to cause the device to perform the method according to any one of claims 1 to 23, 24 to 34, 35 to 37, or 38 and 39.

80. A chip, comprising: a processor, configured to call and run a computer program from a memory, to cause a device installed with the chip to perform the method according to any one of claims 1 to 23, 24 to 34, 35 to 37, or 38 and 39.

81. A computer-readable storage medium, configured to store a computer program that, when run by a device, causes the device to perform the method according to any one of claims 1 to 23, 24 to 34, 35 to 37, or 38 and 39.

82. A computer program product, comprising computer program instructions that cause a computer to perform the method according to any one of claims 1 to 23, 24 to 34, 35 to 37, or 38 and 39.

83. A computer program that causes a computer to perform the method according to any one of claims 1 to 23, 24 to 34, 35 to 37, or 38 and 39.

FIG. 1

FIG. 2A

FIG. 2B

FIG. 2C

FIG. 2D

FIG. 2E

FIG. 2F

Sensing signal
(Sensing signal)

Feedback
(Feedback)

Transmitting
base station
(STx gNB)

Receiving
terminal
(SRx UE)

FIG. 2G

Sensing signal
(Sensing signal)

Transmitting
terminal
(STx UE)

Receiving base station
(SRx gNB)

FIG. 2H

300

A first device determines, based on a path loss of at least one first link, transmit power of a channel/signal used for sensing, the first link including a link related to the channel/signal used for sensing

S310

FIG. 3

400

A second device determines transmit power of a channel/signal based on at least one of a transmit power model and a power control parameter corresponding to the channel/signal

S410

FIG. 4

500 | A third device receives a channel/signal used for sensing that is sent based on transmit power, where the transmit power is determined based on a path loss of at least one first link, and the first link includes a link related to the channel/signal used for sensing — S510

FIG. 5

600 | A fourth device receives a channel/signal that is sent based on transmit power, where the transmit power is determined based on at least one of a transmit power model and a power control parameter corresponding to the channel/signal — S610

FIG. 6

Device 700

First determining module 710

FIG. 7

Device 800

First determining module 710

Sending module 820

FIG. 8

Device 900

Second determining module 910

FIG. 9

Device 1000

Second determining module 910

Third determining module 1020

Fourth determining module 1030

FIG. 10

Device 1100

First receiving module 1110

FIG. 11

Device 1200

Second receiving module 1210

FIG. 12

Device 1300

Memory
1320

Processor
1310

Transceiver
1330

FIG. 13

FIG. 14

### INTERNATIONAL SEARCH REPORT

| International application No. |
| --- |
| **PCT/CN2022/100586** |

**A.  CLASSIFICATION OF SUBJECT MATTER**

H04W52/04(2009.01)i

According to International Patent Classification (IPC) or to both national classification and IPC

**B.  FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, ENTXT, VEN, 3GPP, CNKI, IEEE, 百度, BAIDU: 感知, 感测, 通感, 一体, 功率, 控制, 发射, 发送, 路径损耗, 路损, 修正, 调整, 补偿, 参数, 模型, 公式, 信道, 链路, sense, sensing and communication, integrate, power, control, transmit, send, path loss, modify, amend, adjust, regulate, compensate, parameter, model, formula, channel, link

**C.  DOCUMENTS CONSIDERED TO BE RELEVANT**

| Category* | Citation of document, with indication, where appropriate, of the relevant passages | Relevant to claim No. |
| --- | --- | --- |
| X | CN 110832914 A (HUAWEI TECHNOLOGIES CO., LTD.) 21 February 2020 (2020-02-21) paragraphs 76-258 | 1-83 |
| X | CN 102811478 A (HUAWEI TECHNOLOGIES CO., LTD.) 05 December 2012 (2012-12-05) description, paragraphs 43-250 | 1-83 |
| X | CN 104904280 A (FUJITSU LTD.) 09 September 2015 (2015-09-09) description, paragraphs 81-308 | 1-83 |
| X | CN 108365930 A (HUAWEI TECHNOLOGIES CO., LTD.) 03 August 2018 (2018-08-03) description, paragraphs 115-219 | 1-83 |
| X | CN 110381574 A (VIVO COMMUNICATION TECHNOLOGY CO., LTD.) 25 October 2019 (2019-10-25) description, paragraphs 40-121 | 1-83 |
| X | CN 110786072 A (GUANGDONG OPPO MOBILE TELECOMMUNICATIONS CORP., LTD.) 11 February 2020 (2020-02-11) description, paragraphs 60-174 | 1-83 |

☑ Further documents are listed in the continuation of Box C.   ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **22 February 2023** | **28 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2022/100586**

### C. DOCUMENTS CONSIDERED TO BE RELEVANT

| Category* | Citation of document, with indication, where appropriate, of the relevant passages | Relevant to claim No. |
|---|---|---|
| A | WO 2021258239 A1 (QUALCOMM INC.) 30 December 2021 (2021-12-30)<br>entire document | 1-83 |
| X | IMT-2030(6G)推进组 (IMT-2030(6G) Promotion Group). "通信感知一体化技术研究报告 (Non-official translation: Research Report on Communication Perception Integration Technology)"<br>*https://max.book118.com/html/2021/0917/8141126071004005.shtm*,<br>18 September 2021 (2021-09-18),<br>chapters 3 and 5 | 1-83 |

Form PCT/ISA/210 (second sheet) (July 2022)

| INTERNATIONAL SEARCH REPORT | | | | | | International application No. | |
|---|---|---|---|---|---|---|---|
| Information on patent family members | | | | | | PCT/CN2022/100586 | |

| Patent document cited in search report | | | Publication date (day/month/year) | Patent family member(s) | | | Publication date (day/month/year) |
|---|---|---|---|---|---|---|---|
| CN | 110832914 | A | 21 February 2020 | EP | 3651508 | A1 | 13 May 2020 |
| | | | | EP | 3651508 | A4 | 01 July 2020 |
| | | | | EP | 3651508 | B1 | 02 June 2021 |
| | | | | US | 2020163026 | A1 | 21 May 2020 |
| | | | | WO | 2019019186 | A1 | 31 January 2019 |
| | | | | CN | 110832914 | B | 30 March 2021 |
| CN | 102811478 | A | 05 December 2012 | EP | 2709408 | A1 | 19 March 2014 |
| | | | | EP | 2709408 | A4 | 23 April 2014 |
| | | | | EP | 2709408 | B1 | 11 April 2018 |
| | | | | WO | 2012163282 | A1 | 06 December 2012 |
| | | | | US | 2014087782 | A1 | 27 March 2014 |
| | | | | US | 9414325 | B2 | 09 August 2016 |
| | | | | CN | 102811478 | B | 30 March 2016 |
| CN | 104904280 | A | 09 September 2015 | WO | 2014153745 | A1 | 02 October 2014 |
| CN | 108365930 | A | 03 August 2018 | WO | 2018137424 | A1 | 02 August 2018 |
| | | | | KR | 20190103414 | A | 04 September 2019 |
| | | | | KR | 102209559 | B1 | 28 January 2021 |
| | | | | JP | 2020505857 | A | 20 February 2020 |
| | | | | EP | 3557808 | A1 | 23 October 2019 |
| | | | | EP | 3557808 | A4 | 18 December 2019 |
| | | | | EP | 3557808 | B1 | 02 February 2022 |
| | | | | US | 2019349868 | A1 | 14 November 2019 |
| | | | | US | 11012948 | B2 | 18 May 2021 |
| | | | | IN | 201917029305 | A | 04 October 2019 |
| | | | | VN | 66571 | A | 25 October 2019 |
| | | | | CN | 108365930 | B | 31 August 2021 |
| CN | 110381574 | A | 25 October 2019 | WO | 2019196706 | A1 | 17 October 2019 |
| CN | 110786072 | A | 11 February 2020 | MX | 2019015586 | A | 26 February 2020 |
| | | | | AU | 2017421722 | A1 | 12 December 2019 |
| | | | | TW | 201906458 | A | 01 February 2019 |
| | | | | KR | 20200018452 | A | 19 February 2020 |
| | | | | KR | 102317121 | B1 | 25 October 2021 |
| | | | | JP | 2020529143 | A | 01 October 2020 |
| | | | | PH | 12019502649 | A1 | 28 September 2020 |
| | | | | EP | 3624535 | A1 | 18 March 2020 |
| | | | | EP | 3624535 | A4 | 27 May 2020 |
| | | | | EP | 3624535 | B1 | 22 June 2022 |
| | | | | BR | 112019027940 | A2 | 14 July 2020 |
| | | | | US | 2020205082 | A1 | 25 June 2020 |
| | | | | US | 11218974 | B2 | 04 January 2022 |
| | | | | CA | 3064824 | A1 | 03 January 2019 |
| | | | | WO | 2019000321 | A1 | 03 January 2019 |
| | | | | RU | 2735333 | C1 | 30 October 2020 |
| | | | | TW | 754075 | B1 | 01 February 2022 |
| | | | | IN | 201917047118 | A | 03 January 2020 |
| | | | | SG | 11201911140 | A1 | 30 January 2020 |
| | | | | VN | 69431 | A | 25 March 2020 |
| | | | | ID | 202001673 | A1 | 12 June 2020 |
| | | | | CN | 111294912 | A | 16 June 2020 |

Form PCT/ISA/210 (patent family annex) (July 2022)

International application No.

**PCT/CN2022/100586**

| Patent document cited in search report | | | Publication date (day/month/year) | Patent family member(s) | | | Publication date (day/month/year) |
|---|---|---|---|---|---|---|---|
| | | | | ZA | 201907826 | A | 28 April 2021 |
| WO | 2021258239 | A1 | 30 December 2021 | None | | | |